(19) **Europäisches Patentamt / European Patent Office / Office européen des brevets**

(11) **EP 4 707 099 A1**

(12) **EUROPEAN PATENT APPLICATION**
published in accordance with Art. 153(4) EPC

(43) Date of publication:
**11.03.2026 Bulletin 2026/11**

(21) Application number: **24822273.9**

(22) Date of filing: **28.02.2024**

(51) International Patent Classification (IPC):
**B60W 30/045** (2012.01)  **B60W 40/107** (2012.01)

(52) Cooperative Patent Classification (CPC):
Y02T 10/72

(86) International application number:
**PCT/CN2024/079141**

(87) International publication number:
**WO 2024/255315 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 CN 202310711087**

(71) Applicant: **Shenzhen Yinwang Intelligent
Technologies Co., Ltd.
Shenzhen, Guangdong 518110 (CN)**

(72) Inventors:
• **DING, Xiaodong**
  Shenzhen, Guangdong 518129 (CN)
• **LIU, Donghao**
  Shenzhen, Guangdong 518129 (CN)
• **LUO, Jie**
  Shenzhen, Guangdong 518129 (CN)
• **ZHANG, Yongsheng**
  Shenzhen, Guangdong 518129 (CN)
• **HE, Lang**
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **TORQUE CONTROL METHOD AND APPARATUS**

(57)    A torque control method is provided, including: obtaining status information of a vehicle; determining a vehicle status and a required value of longitudinal acceleration based on the status information of the vehicle; determining a corrected value of the longitudinal acceleration based on the status information of the vehicle, the required value of the longitudinal acceleration, and a constraint corresponding to the vehicle status; and controlling torque of the vehicle based on the corrected value of the longitudinal acceleration. A torque control apparatus, a transportation means, a chip system, a computer-readable storage medium, and a computer program product are also disclosed.

```
S601  A vehicle control unit obtains status information of a vehicle
        ↓
S602  The vehicle control unit determines a vehicle status and a required value of
        longitudinal acceleration based on the status information of the vehicle
        ↓
S603  The vehicle control unit determines a corrected value of the longitudinal
        acceleration based on the status information of the vehicle, the required value
        of the longitudinal acceleration, and a constraint corresponding to the vehicle
        status
        ↓
S604  The vehicle control unit controls torque of the vehicle based on the corrected
        value of the longitudinal acceleration
```

FIG. 6

## Description

This application claims priority to Chinese Patent Application No. 202310711087.2, filed with the China National Intellectual Property Administration on June 15, 2023 and entitled "TORQUE CONTROL METHOD AND APPARATUS", which is incorporated herein by reference in its entirety.

## TECHNICAL FIELD

This application relates to the field of driving technologies, and in particular, to a torque control method and apparatus.

## BACKGROUND

With continuous development of vehicle driving technologies, driving quality also needs to be improved while driving performance is improved, and driving experience gradually becomes a focus of attention in the driving technologies. In a traveling process of a vehicle, different motion control such as braking and traveling of the vehicle affects driving experience of a driver and a passenger. For example, in the traveling process of the vehicle, the driver and the passenger can directly feel stability and comfort of the vehicle. Driving experience of the driver and the passenger varies with a vehicle status. If the vehicle travels stably, it indicates that stability and comfort of the vehicle are high, and driving experience of the driver and the passenger is good. If the vehicle shakes, it indicates that stability and comfort of the vehicle are low, and driving experience of the driver and the passenger is poor.

Especially in a turning scenario, if the driver performs an inappropriate operation, a sense of jerk of the vehicle is increased, and driving experience of the driver and the passenger is affected. For example, an inappropriate deceleration, steering, or acceleration operation of the driver in a turning process is likely to cause shaking of a vehicle body and skidding or overturning of the vehicle. In addition, in this process, driving experience of the driver and the passenger deteriorates, for example, bodies of the driver and the passenger shake with the vehicle. Therefore, how to improve driving experience becomes an urgent technical problem to be resolved.

## SUMMARY

Embodiments of this application provide a torque control method and apparatus, to optimize a torque control strategy and appropriately control torque.

To achieve the foregoing objectives, embodiments of this application provide the following technical solutions.

According to a first aspect, an embodiment of this application provides a torque control method. The method includes: obtaining status information of a vehicle; determining a vehicle status and a required value of longitudinal acceleration based on the status information of the vehicle; then determining a corrected value of the longitudinal acceleration based on the status information of the vehicle, the required value of the longitudinal acceleration, and a constraint corresponding to the vehicle status; and finally controlling torque of the vehicle based on the corrected value of the longitudinal acceleration.

In this way, the torque of the vehicle can be appropriately controlled based on the status information of the vehicle, a torque control strategy is optimized, and precision for controlling the torque of the vehicle is improved, so that comfort and stability in a traveling process of the vehicle are improved, and driving experience of a user is improved.

According to the first aspect, the status information includes one or more of the following: an active safety function status, a speed, lateral acceleration, longitudinal acceleration, a lateral impact degree, an accelerator pedal opening degree, a brake pedal opening degree, and a gear status.

In some examples, the status information may further include a steering wheel rotation speed of the vehicle, a road grade of a road on which the vehicle is located, radar information, and the like.

In a possible implementation, the status information of the vehicle is obtained by using various sensors mounted on the vehicle.

According to any one of the first aspect or the foregoing implementations of the first aspect, determining the vehicle status and the required value of the longitudinal acceleration based on the status information of the vehicle includes: determining the vehicle status based on the status information of the vehicle; preprocessing the status information of the vehicle to determine whether to enable a comfort torque control function; and if the comfort torque control function is enabled, determining the required value of the longitudinal acceleration based on the status information of the vehicle; or if the comfort torque control function is not enabled, determining that the required value of the longitudinal acceleration is 0, and the corresponding corrected value of the longitudinal acceleration is also 0.

In some examples, the vehicle status includes a driving state, a braking state, and a coasting state.

In a possible implementation, after it is determined to enable the comfort torque control function, the lateral acceleration and the lateral impact degree in the status information of the vehicle are input into a dynamical model, to obtain the required value of the longitudinal acceleration of the vehicle.

In this way, whether to enable the comfort torque control function is determined based on a preprocessing result of the status information of the vehicle, to meet different requirements of the user.

According to any one of the first aspect or the foregoing implementations of the first aspect, preprocessing the status information of the vehicle to determine whether to enable the comfort torque control function includes: determining, based on the status information, whether the active safety function status in the status information meets a first trigger condition; if it is determined that the active safety function status meets the first trigger condition, determining, based on the status information, whether the speed, the lateral acceleration, and the lateral impact degree in the status information of the vehicle meet a second trigger condition; otherwise, skipping enabling the comfort torque control function; if it is determined that the speed, the lateral acceleration, and the lateral impact degree of the vehicle meet the second trigger condition, determining, based on the status information, whether a gear status in the status information of the vehicle meets a third trigger condition; otherwise, skipping enabling the comfort torque control function; and if it is determined that the gear status of the vehicle meets the third trigger condition, determining to enable the comfort torque control function; otherwise, skipping enabling the comfort torque control function.

The first trigger condition includes that the active safety function status is equal to a first threshold, where the first threshold indicates that an active safety function is not enabled on the vehicle; the second trigger condition includes that the speed is within a safe speed range, the lateral acceleration is within a safe lateral acceleration range, and the lateral impact degree is within a safe lateral impact degree range; and the third trigger condition includes that the gear status is equal to a second threshold, where the second threshold is a preset value corresponding to the gear status during normal traveling of the vehicle.

For example, the status information of the vehicle is represented by using a flag bit, a standard flag bit is also set for each trigger condition, and whether to enable the comfort torque control function is determined by comparing the flag bit corresponding to the status information of the vehicle with the standard flag bit.

In this way, a case in which the active safety function intervenes in the safety of the vehicle is considered. If the vehicle enables the active safety function or the speed, the acceleration, the gear status, and the like of the vehicle do not meet the corresponding trigger condition, safety is primarily considered, and comfort target torque control is smoothly exited, so that safety performance of the vehicle can be ensured.

According to any one of the first aspect or the foregoing implementations of the first aspect, a radius and a curvature of a bend are sensed in advance based on the radar information in the obtained status information, and an intervention occasion and an intervention operation of the comfort torque control function are determined based on the radius and the curvature of the curve.

In this way, the bend is sensed in advance based on the information collected by the vehicle and the function enabled by the vehicle, and comfort torque control is performed in advance, to further improve precision for controlling the torque of the vehicle, so that the vehicle passes through the bend more smoothly, and comfort of the vehicle is improved.

According to any one of the first aspect or the foregoing implementations of the first aspect, determining the corrected value of the longitudinal acceleration based on the status information of the vehicle, the required value of the longitudinal acceleration, and the constraint corresponding to the vehicle status includes: determining, based on the status information, whether the vehicle status is a driving state; and if it is determined that the vehicle status is the driving state, determining whether the status information of the vehicle and the required value of the longitudinal acceleration meet a first constraint; and if it is determined that the status information of the vehicle and the required value of the longitudinal acceleration meet the first constraint, determining the required value of the longitudinal acceleration as the corrected value of the longitudinal acceleration; otherwise, determining that the corrected value of the longitudinal acceleration is 0; or if it is determined that the vehicle status is not the driving state, determining whether the status information of the vehicle and the required value of the longitudinal acceleration meet a second constraint; and if the status information of the vehicle and the required value of the longitudinal acceleration meet the second constraint, determining the required value of the longitudinal acceleration as the corrected value of the longitudinal acceleration; otherwise, determining the corrected value of the longitudinal acceleration from a calibration map table based on the status information of the vehicle.

The first constraint is a corresponding requirement that corresponds to the driving state and that is for determining the corrected value of the longitudinal acceleration, and the second constraint is a corresponding requirement that corresponds to the braking and coasting state and that is for determining the corrected value of the longitudinal acceleration.

In some examples, the first constraint is that the required value of the longitudinal acceleration is greater than 0 and the accelerator pedal opening degree is greater than a first status threshold. When the vehicle status is the driving state, and the accelerator pedal opening degree in the status information of the vehicle is greater than the first status threshold and the required value of the longitudinal acceleration is greater than 0, the required value of the longitudinal acceleration is determined as the corrected value of the longitudinal acceleration; otherwise, the corrected value of the longitudinal acceleration is determined as 0.

In some other examples, the second constraint is that the required value of the longitudinal acceleration is less than 0, the brake pedal opening degree is greater than a second state threshold, and a derivative of the required value of the longitudinal acceleration is less than a derivative of actual longitudinal acceleration. When the vehicle status is the braking and coasting state, the brake pedal opening degree in the status information of the vehicle is greater than the second status threshold, the required value of the longitudinal acceleration is less than 0, and the derivative of the required value of the longitudinal acceleration is less than the derivative of the actual longitudinal acceleration, the required value of the longitudinal acceleration is determined as the corrected value of the longitudinal acceleration; or when the brake pedal opening degree in the status information of the vehicle is greater than the second status threshold, the required value of the longitudinal acceleration is less than 0, and the derivative of the required value of the longitudinal acceleration is greater than or equal to the derivative of the actual longitudinal acceleration, the corrected value of the longitudinal acceleration is determined from the calibration map table based on the status information of the vehicle.

The first status threshold is a critical value of the accelerator pedal during turning. The second status threshold is a critical value of the brake pedal during turning.

In a possible implementation, the corresponding corrected value of the longitudinal acceleration is determined from the calibration map table based on the speed of the vehicle, the steering wheel rotation speed of the vehicle, and the lateral impact degree of the vehicle, and the corrected value of the longitudinal acceleration in the map table is determined as the corrected value of the longitudinal acceleration that needs to be currently performed by the vehicle.

In this way, a matched corrected amount of the longitudinal acceleration is determined based on the constraint corresponding to the vehicle status, so that the torque of the vehicle is accurately adjusted and controlled subsequently based on the accurate corrected amount of the longitudinal acceleration, thereby improving stability of the vehicle and improving user experience.

According to any one of the first aspect or the foregoing implementations of the first aspect, before determining the corrected value of the longitudinal acceleration based on the status information of the vehicle, the required value of the longitudinal acceleration, and the constraint corresponding to the vehicle status, the method further includes: obtaining an accelerator pedal opening degree and a brake pedal opening degree in the status information; and comparing the accelerator pedal opening degree and the brake pedal opening degree with respective corresponding status thresholds, to determine an accelerator pedal flag bit and a brake pedal flag bit.

According to any one of the first aspect or the foregoing implementations of the first aspect, controlling the torque of the vehicle based on the corrected value of the longitudinal acceleration includes: controlling the torque of the vehicle based on a motor driving mode and the corrected value of the longitudinal acceleration.

According to any one of the first aspect or the foregoing implementations of the first aspect, controlling the torque of the vehicle based on the motor driving mode and the corrected value of the longitudinal acceleration includes: if the motor driving mode is single-motor driving, increasing or decreasing the torque by a single motor based on the corrected value of the longitudinal acceleration; or if the motor driving mode is dual-motor driving, decreasing the torque by a rear motor based on the corrected value of the longitudinal acceleration, or increasing the torque by a front motor based on the corrected value of the longitudinal acceleration.

In this way, the torque is adaptively adjusted based on the motor driving mode, so that a time lag and a delay of a system can be reduced, a torque change amount can be accurately adjusted, comfort and stability of the vehicle during turning can be effectively improved, and vehicle component wear can be reduced.

According to a second aspect, an embodiment of this application provides a torque control apparatus. The apparatus includes a processor and a memory, where the memory is coupled to the processor, the memory is configured to store computer-readable instructions, and when the processor reads the computer-readable instructions from the memory, the torque control apparatus is enabled to perform the method according to any one of the first aspect or the implementations of the first aspect.

For example, the apparatus is a vehicle control unit, a vehicle, a component that is in a vehicle control unit and that can perform any one of the possible methods in any one of the foregoing aspects, or a component that is in a vehicle and that can perform any one of the possible methods in any one of the foregoing aspects.

For another example, the apparatus may alternatively be another device or a component in another device. For example, a device other than a vehicle may determine torque, and notify the vehicle of the torque.

According to a third aspect, an embodiment of this application provides a transportation means, where the transportation means includes the torque control apparatus according to the second aspect.

Optionally, the transportation means includes a vehicle. For example, the vehicle may be an electric vehicle, a car, a truck, a motorcycle, a bus, a lawn mower, a recreational vehicle, a playground vehicle, a construction device, a trolley, a golf cart, a train, a handcart, or the like. This is not particularly limited in embodiments of this application.

According to a fourth aspect, an embodiment of this application provides a chip system, including at least one processor and at least one interface circuit. The at least one interface circuit is configured to: perform a transceiver function, and send instructions to the at least one processor. The at least one processor executes the instructions, so that the at least one processor performs the method according to any one of the first aspect and the implementations of the first aspect.

According to a fifth aspect, an embodiment of this application provides a computer-readable storage medium. The computer-readable storage medium includes a computer program (which may also be referred to as instructions or code). When the computer program runs on a computer, the computer is enabled to perform the method according to any one of the first aspect and the implementations of the first aspect.

According to a sixth aspect, an embodiment of this application provides a computer program product. When the computer program product runs on a computer, the computer is enabled to perform the method according to any one of the first aspect and the implementations of the first aspect.

For technical effects corresponding to the second aspect to the sixth aspect and any one of the implementations of the second aspect to the sixth aspect, refer to technical effects corresponding to the first aspect and any one of the implementations of the first aspect. Details are not described herein again.

**BRIEF DESCRIPTION OF DRAWINGS**

FIG. 1 is a schematic flowchart of an acceleration/-deceleration control strategy in a related technology according to an embodiment of this application;
FIG. 2 is a schematic flowchart of a vehicle traveling control strategy in a related technology according to an embodiment of this application;
FIG. 3 is a diagram of a structure of a torque control system according to an embodiment of this application;
FIG. 4 is a diagram of a hardware structure of a torque control apparatus according to an embodiment of this application;
FIG. 5 is a diagram of a structure of a vehicle according to an embodiment of this application;
FIG. 6 is a schematic flowchart 1 of a torque control method according to an embodiment of this application;
FIG. 7 is a schematic flowchart 2 of a torque control method according to an embodiment of this application;
FIG. 8 is a schematic flowchart 3 of a torque control method according to an embodiment of this application;
FIG. 9 is a schematic flowchart 4 of a torque control method according to an embodiment of this application;
FIG. 10 is a schematic flowchart 5 of a torque control method according to an embodiment of this application;
FIG. 11 is a diagram of a structure of a torque control apparatus according to an embodiment of this application; and
FIG. 12 is a diagram of a structure of a chip system according to an embodiment of this application.

**DESCRIPTION OF EMBODIMENTS**

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In the descriptions of embodiments of this application, unless otherwise specified, "a plurality of" means two or more than two. In embodiments of this application, the term "example" or "for example" is used to represent giving an example, an illustration, or a description. Any embodiment or design scheme described as "example" or "for example" in embodiments of this application should not be construed as being more preferred or having more advantages than another embodiment or design scheme. Exactly, use of the word "example", "for example", or the like is intended to present a related concept in a specific manner.

Some terms and related technologies in this application are first described, to facilitate understanding by a person skilled in the art.

Torque: A special moment of a force that makes an object rotate. Torque in a vehicle is a moment of a force output by an engine from a crankshaft end. The torque affects acceleration performance of the vehicle. A larger torque indicates larger acceleration, a larger grade, and a larger load weight of the vehicle. The torque may reflect a load capability of the vehicle in a specific range. A unit of the torque is Newton meter (N·m).

Longitudinal acceleration: The longitudinal acceleration is acceleration along a front-to-back direction of a vehicle, that is, acceleration along a traveling direction of the vehicle. The longitudinal acceleration affects driving safety and comfort of the vehicle. A unit of the longitudinal acceleration is meters per quadratic second $(m/s^2)$.

Lateral acceleration: A lateral direction is a direction perpendicular to a traveling direction of a vehicle, and the lateral acceleration indicates acceleration whose action direction is perpendicular to the traveling direction of the vehicle. The lateral acceleration may be acceleration brought by a centrifugal force generated when the vehicle turns. The larger the lateral acceleration, the more likely the vehicle is to be "thrown" away from a traveling route. A unit of the lateral acceleration is meters per quadratic second (m/s²).

It may be understood that, a conventional fuel vehicle burns an oil product by using an engine, so that generated mixed air drives a piston to move repeatedly in a cylinder, causing a crankshaft to rotate and output power. Then, a transmission ratio and a rotation manner of the output power are changed by using a gearbox. Finally, wheels are driven to rotate by using a transmission shaft to drive the vehicle to move forward or backward.

An electric vehicle uses vehicle-mounted power supply as power, and converts electric energy into mechanical energy. The vehicle is driven to travel by a motor. Except for an electrically-driven control system (including the vehicle-mounted power supply and the motor), functions and structures of other parts of the electric vehicle are basically the same as those of the conventional fuel vehicle. In other words, a power system of the conventional fuel vehicle is different from a power system of the electric vehicle. The conventional fuel vehicle generates power by burning an oil product, and the electric vehicle uses electric energy as power.

Currently, a g-vectoring control (g-vectoring control, GVC) system technology is used in a related technology. Based on the GVC, torque of an engine is intelligently controlled based on an operation performed by a driver on a steering wheel, so that a magnitude and a direction of acceleration of a vehicle are obtained, and the vehicle obtains a large grip force when turning. This improves precision and stability of vehicle steering and improves driving experience of the driver and a passenger.

Specifically, when the vehicle turns, based on the GVC, longitudinal acceleration is reduced in response to an operation of rotating the steering wheel by the driver, so that a center of gravity of the vehicle is moved forward, and a vehicle load is transferred to a front axle. This increases a side force of a front wheel and enhances grip of a front wheel tire, and improves stability of the vehicle during turning. After the vehicle turns stably, based on the GVC, longitudinal acceleration is increased in response to an operation of operating the steering wheel to maintain a specific direction and angle by the driver, so that the center of gravity of the vehicle is moved backward, and the vehicle load is transferred to a rear axle. This enhances grip of a rear wheel tire and improves stability of the vehicle. In the foregoing manner, in a traveling process of the vehicle, stability of the vehicle is improved, and driving experience of the user is further improved.

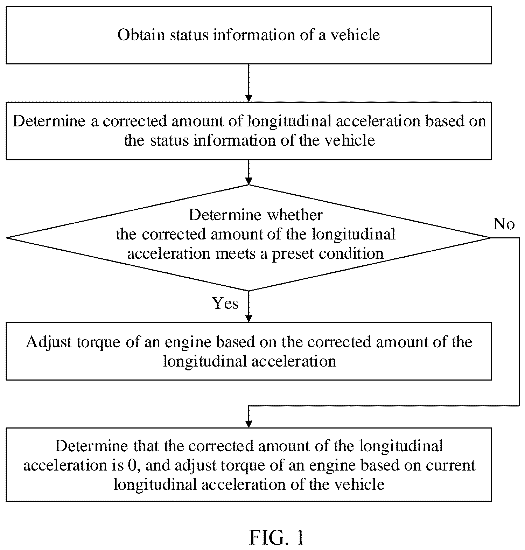

FIG. 1 is a schematic flowchart of a core control strategy in an acceleration/deceleration control apparatus in a related technology. First, status information of a vehicle is obtained, for example, lateral acceleration, longitudinal acceleration, and a derivative of the lateral acceleration that is obtained by performing derivation on the lateral acceleration. Then, a corrected amount of the longitudinal acceleration is determined based on the status information of the vehicle. For example, the status information of the vehicle is substituted into a preset formula to obtain the corrected amount of the longitudinal acceleration through calculation. Finally, it is determined whether the corrected amount of the longitudinal acceleration meets a preset condition. If the corrected amount of the longitudinal acceleration meets the preset condition, torque of an engine is adjusted based on the corrected amount of the longitudinal acceleration; or if the corrected amount of the longitudinal acceleration does not meet the preset condition, it is determined that the corrected amount of the longitudinal acceleration is 0, and torque of an engine is adjusted based on the current longitudinal acceleration of the vehicle.

In this way, in a bend scenario, the torque of the engine may be adaptively adjusted based on the real-time status information of the vehicle, to adjust the torque of drive wheels (for example, front wheels or rear wheels) and adjust a load capability of the vehicle, so as to improve stability and comfort of the vehicle in the bend scenario, and improve driving experience of a user.

However, the control strategy is only applicable to conventional fuel vehicles, and power generated after the torque of the engine is changed can only be applied to the drive wheels, which is prone to wear of the drive wheels.

In addition, due to constraint of a tire friction force, when a torque variation corresponding to the corrected amount of the longitudinal acceleration is greater than an actual front wheel torque, a lateral force is reduced. For example, if front wheel torque detected in real time when the vehicle turns is 8 Newton meters, it is determined, based on the real-time status information of the vehicle, that the vehicle should decrease the torque, and the torque variation corresponding to the corrected amount of the longitudinal acceleration of the vehicle is 9 Newton meters, the torque after adjustment should be -1 Newton meters. However, a lateral force when the torque is 8 Newton meters is greater than a lateral force when the torque is -1 Newton meters. If the torque of the vehicle is adjusted based on the torque variation of 9 Newton meters, the lateral force is reduced, and stability of the vehicle during turning is reduced, thereby generating an effect opposite to the driver's intention.

In addition, the foregoing control strategy adjusts the torque of the engine only based on the status information such as the real-time lateral acceleration and longitudinal acceleration of the vehicle. A situation in which a vehicle stabilization system and an active safety technology intervene is not considered, and impact of a gear status of the vehicle on vehicle control is not considered. For example, the vehicle stabilization system and the active safety technology include an electronic stability program (electronic stability program, ESP), an anti-lock braking system (anti-lock braking system, ABS), and a traction control system (traction control system, TCS). When the vehicle starts any one or more of the foregoing systems, control is preferentially performed based on the foregoing systems, because safe traveling of the vehicle is more important than comfort driving and riding. When the vehicle is in a dangerous state, the vehicle should be controlled to a safe state first. When the vehicle is in a safe state, comfort of the vehicle should then be considered.

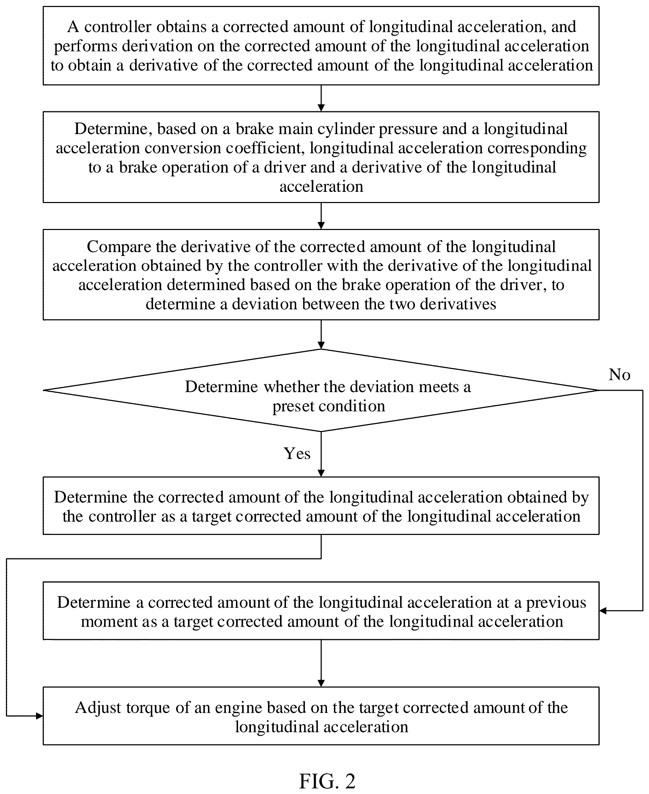

Based on the solution described in FIG. 1, a manner of determining a corrected amount of the longitudinal acceleration is further refined in a related technology. FIG. 2 is a schematic flowchart of a core control strategy in a vehicle traveling control apparatus disclosed in a related technology.

Specifically, a controller obtains the corrected amount of the longitudinal acceleration described in FIG. 1, and performs derivation on the corrected amount of the longitudinal acceleration to obtain a derivative of the corrected amount of the longitudinal acceleration. The vehicle monitors a brake operation of the driver, and determines, based on a brake main cylinder pressure and a longitudinal acceleration conversion coefficient, longitudinal acceleration corresponding to the brake operation of the driver and a derivative of the longitudinal acceleration. Then, the derivative of the corrected amount of the longitudinal acceleration obtained by the controller is compared with the derivative of the longitudinal acceleration determined based on the brake operation of the driver, to determine a deviation between the two derivatives. A target corrected amount of the longitudinal acceleration of the vehicle is determined based on the deviation between the two derivatives. It is determined whether the deviation meets a preset condition. If the deviation meets the preset condition, it is determined that the deviation is small, and the corrected amount of the longitudinal acceleration obtained by the controller is determined as the target corrected amount of the longitudinal acceleration. Alternatively, if the deviation does not meet the preset condition, it is determined that the deviation is large, and a corrected amount of the longitudinal acceleration at a previous moment is determined as the target corrected amount of the longitudinal acceleration. Finally, torque of an engine is adjusted based on the target corrected amount of the longitudinal acceleration. The controller of the vehicle stores a corrected amount of the longitudinal acceleration obtained through calculation based on status information at each moment.

In this way, when the corrected amount of the longitudinal acceleration is determined, braking data (the longitudinal acceleration obtained by converting the main cylinder pressure) is further considered, so that a manner of obtaining the corrected amount of the longitudinal acceleration is further refined, the torque of the vehicle is controlled based on more accurate data, and driving and riding comfort can be further improved. However, this control strategy is only applicable to conventional fuel vehicles, and is not applicable to electric vehicles, and is not compatible with a single-pedal mode of the electric vehicles. In addition, when the deviation is large, the corrected amount of the longitudinal acceleration at the previous moment is directly used, and this may cause loss of vehicle dynamics. Power transmission also generates a specific time lag and delay, and this cannot be precisely controlled, so that stability and comfort of the vehicle cannot be effectively improved.

In an existing electric vehicle, no control strategy is set for a turning scenario, and corresponding control is performed only based on a driver requirement. Active intervention in the turning scenario is not considered to control the vehicle to achieve stable turning and improve comfort of the vehicle.

To resolve the foregoing technical problems, an embodiment of this application provides a torque control method. A vehicle status and a required value of the longitudinal acceleration are determined based on real-time status information of a vehicle; then a corrected value of the longitudinal acceleration is determined based on the required value of the longitudinal acceleration and a constraint corresponding to the vehicle status; and finally torque of the vehicle is controlled based on the corrected value of the longitudinal acceleration. According to the method provided in this embodiment of this application, a torque control strategy is optimized, and precision for controlling the torque of the vehicle is further improved, so that comfort and stability in a traveling process of the vehicle are improved, and driving experience of a user is improved.

The following describes the technical solutions in embodiments of this application with reference to the accompanying drawings in embodiments of this application. It is clear that the described embodiments are merely a part rather than all of embodiments of this application.

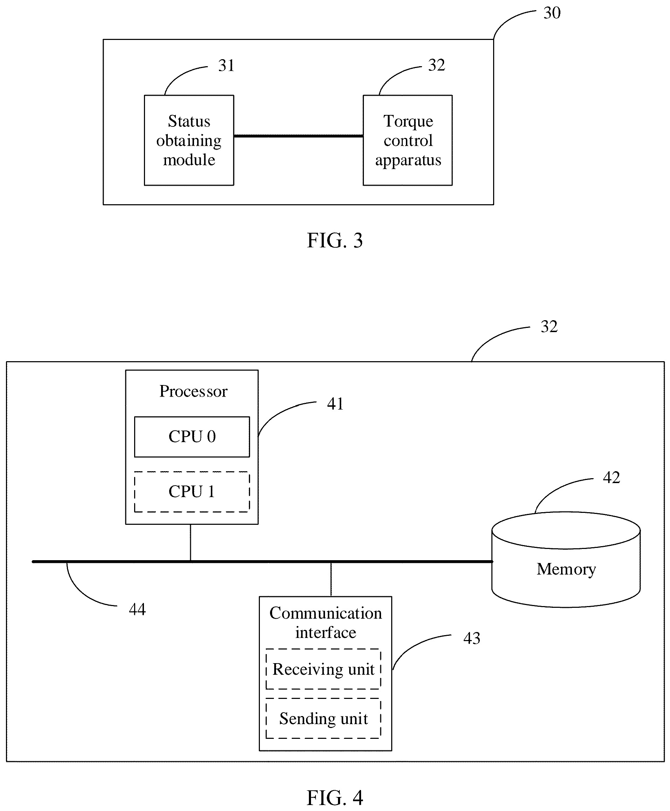

FIG. 3 shows a torque control system 30 according to an embodiment of this application. As shown in FIG. 3, the torque control system 30 includes a status obtaining module 31 and a torque control apparatus 32. The status obtaining module 31 and the torque control apparatus 32 are connected and communicate with each other.

The status obtaining module 31 is configured to obtain status information of a vehicle, and report the status information to the torque control apparatus 32. Optionally, the status information of the vehicle includes an active safety function status, a vehicle speed, a gear status, lateral acceleration, longitudinal acceleration, an acceleration pedal opening degree, a brake pedal opening degree, and the like of the vehicle.

The status obtaining module 31 includes a vehicle sensor, and the vehicle sensor is usually disposed inside the vehicle. The vehicle sensor may be configured to detect the status information of the vehicle. The vehicle sensor may be any one of a photoelectric speed sensor, a magnetoelectric speed sensor, or a Hall speed sensor. This is not limited herein.

It may be understood that because the vehicle sensor is disposed in the vehicle, when the status obtaining module 31 is the vehicle sensor, the status obtaining module 31 moves with the vehicle, and in this case, the status obtaining module 31 and the torque control apparatus 32 may communicate with each other through a wireless communication network.

It should be understood that the foregoing descriptions of the status obtaining module 31 is merely an example for description, and a specific form and an implementation of the status obtaining module 31 are not specifically limited in embodiments of this application.

With reference to FIG. 3, the torque control apparatus 32 shown in FIG. 3 may be configured to correspondingly adjust torque based on the status information received from the status obtaining module 31.

Optionally, the torque control apparatus 32 may be a server. For example, the torque control apparatus 32 may be a server in an intelligent transportation system, for example, a physical service or a cloud server. This is not limited in embodiments of this application.

FIG. 4 shows a hardware structure of a torque control apparatus 32 according to an embodiment of this application. As shown in FIG. 4, the torque control apparatus 32 includes a processor 41, a memory 42, a communication interface 43, and a bus 44. The processor 41, the memory 42, and the communication interface 43 may be connected through the bus 44. The processor 41 is configured to manage and control an action of the torque control apparatus 32, and/or is configured to perform a torque control method described below. The memory 42 is configured to store program code and data of the torque control apparatus 32. The communication interface 43 is configured to support the torque control apparatus 32 in communicating with another network entity.

The processor 41 (or described as a controller) is a control center of the torque control apparatus 32, and may implement or execute various example logical blocks, unit modules, and circuits described with reference to content disclosed in this application. The processor or the controller may be a general-purpose central processing unit (central processing unit, CPU), a general-purpose processor, a digital signal processor, an application-specific integrated circuit, a field programmable gate array or another programmable logic device, a transistor logic device, a hardware component, or any combination thereof. The general-purpose processor may be a microprocessor, any conventional processor, or the like. Alternatively, the processor 41 may be a combination of processors implementing a computing function, for example, a combination of one or more microprocessors, or a combination of a DSP and a microprocessor.

For example, the processor 41 may include one or more CPUs, for example, a CPU 0 and a CPU 1 shown in FIG. 4.

The memory 42 may be a read-only memory (read-only memory, ROM), another type of static storage device that can store static information and instructions, a random access memory (random access memory, RAM), or another type of dynamic storage device that can store information and instructions, or may be a flash memory, a hard disk, or a solid state disk, or may be an electrically erasable programmable read-only memory (electrically erasable programmable read-only memory, EEPROM), a magnetic disk storage medium, or another magnetic storage device, or any other medium that can be used to carry or store expected program code in a form of an instruction structure or a data structure and that is accessible to a computer. However, this is not limited thereto. The memory 42 may further include a combination of the foregoing types of memories. In a possible implementation, the memory 42 may be independent of the processor 41. The memory 42 may be connected to the processor 41 through the bus 44, and is configured to store data, instructions, or program code. When invoking and executing the instructions or program code stored in the memory 42, the processor 41 can implement the torque control method provided in embodiments of this application.

In another possible implementation, the memory 42 may alternatively be integrated with the processor 41.

The communication interface 43 is configured to connect the torque control apparatus 32 to another device (for example, the status obtaining module 31) through a communication network. The communication network may be a transceiver circuit, an Ethernet, a radio access network (radio access network, RAN), a wireless local area network (wireless local area networks, WLAN), or the like. The communication interface 43 may include a receiving unit configured to receive data and a sending unit configured to send data.

The bus 44 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus.

It should be noted that the structure shown in FIG. 4 does not constitute a limitation on the management and control device. In addition to the components shown in FIG. 4, the torque control apparatus 32 may include more or fewer components than those shown in the figure, or a combination of some components, or splits from some components, or a different component layout.

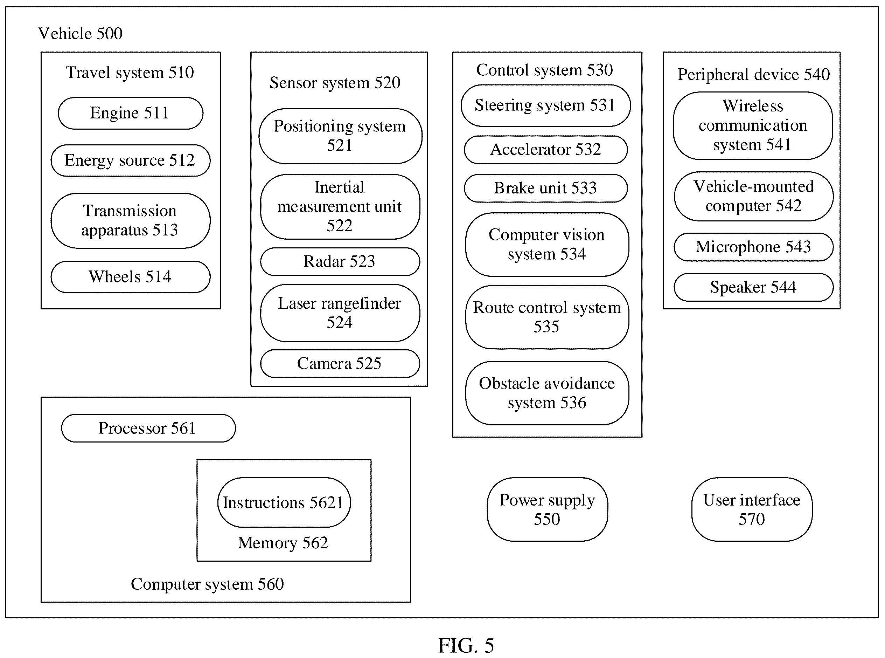

FIG. 5 is a diagram of a structure of a vehicle 500 according to an embodiment of this application. With reference to FIG. 5, the vehicle 500 may include various subsystems, for example, a travel system 510, a sensor system 520, a control system 530, one or more peripheral devices 540, a power supply 550, a computer system 560, and a user interface 570. Optionally, the vehicle 500 may include more or fewer subsystems, and each subsystem may include a plurality of elements. In addition, all the subsystems and elements of the vehicle 500 may be interconnected in a wired or wireless manner.

The travel system 510 may include a component providing power to the vehicle 500 for moving. In an embodiment, the travel system 510 may include an engine 511, an energy source 512, a transmission apparatus 513, and wheels 514.

The engine 511 may be a motor or a combination of other types of engines. The engine 511 converts the energy source 512 into mechanical energy.

Examples of the energy source 512 include solar panels, batteries, and other power sources.

The transmission apparatus 513 may transmit mechanical power from the engine 511 to the wheels 514. The transmission apparatus 513 may include a gearbox, a differential, and a drive shaft. In an embodiment, the transmission apparatus 513 may further include another component, for example, a clutch. The drive shaft may include one or more shafts that may be coupled to one or more wheels 514.

The sensor system 520 may include several sensors that can sense information about an ambient environment of the vehicle 500. For example, the sensor system 520 may include a positioning system 521 (the positioning system may be a global positioning system (global positioning system, GPS), a BeiDou system, or another positioning system), an inertial measurement unit (inertial measurement unit, IMU) 522, a radar 523, a laser rangefinder 524, and a camera 525. The sensor system 520 may further include a sensor (for example, an in-vehicle air quality monitor, a fuel gauge, or an engine oil thermometer) of an internal system of the monitored vehicle 500. One or more pieces of sensor data collected by these sensors may be used to detect an object and a corresponding feature (a location, a shape, a direction, a speed, or the like) of the object. Such detection and recognition are keys for achieving safe driving of the vehicle 500.

The positioning system 521 may be configured to estimate a geographic location of the vehicle 500.

The IMU 522 is configured to sense location and orientation changes of the vehicle 500 based on an inertial acceleration. In an embodiment, the IMU 522 may be a combination of an accelerometer and a gyroscope.

The radar 523 may sense an object in the ambient environment of the vehicle 500 through a radio signal. In some embodiments, in addition to sensing an object, the radar 523 may further be configured to sense a speed and/or a moving direction of the object.

The laser rangefinder 524 may sense, by using a laser, an object in an environment in which the vehicle 500 is located. In some embodiments, the laser rangefinder 524 may include one or more laser sources, a laser scanner, one or more detectors, and another system component.

The camera 525 may be configured to capture a plurality of images of the ambient environment of the vehicle 500 and a plurality of images in a vehicle driving cabin. The camera 525 may be a static camera or a video camera.

The control system 530 controls operations of the vehicle 500 and components of the vehicle 500. The control system 530 may include various elements, including a steering system 531, an accelerator 532, a brake unit 533, a computer vision system 534, a route control system 535, and an obstacle avoidance system 536. The obstacle avoidance system 536 may also be referred to as an obstacle avoidance system.

The steering system 531 may be operated to adjust a moving direction of the vehicle 500. For example, in an embodiment, the steering system 531 may be a steering wheel system.

The accelerator 532 is configured to control an operating speed of the engine 511 and further control a speed of the vehicle 500.

The brake unit 533 is configured to control the vehicle 500 to decelerate. The brake unit 533 may use friction to slow down the wheels 514. In another embodiment, the brake unit 533 may convert kinetic energy of the wheels 514 into a current. Alternatively, the brake unit 533 may reduce a rotational speed of the wheels 514 in another form to control the speed of the vehicle 500.

The computer vision system 534 may process and analyze an image captured by the camera 525, to recognize an object and/or a feature in the ambient environment of the vehicle 500 and a body feature and a facial feature of a driver in the vehicle driving cabin. The object and/or the feature may include a traffic signal, a road condition, and an obstacle, and the body feature and the facial feature of the driver include a behavior, a line of sight, an expression, and the like of the driver. The computer vision system 534 may use an object recognition algorithm, a structure from motion (structure from motion, SFM) algorithm, video tracking, and another computer vision technology. In some embodiments, the computer vision system 534 may be further configured to draw a map for an environment, track an object, estimate a speed of the object, determine a driver behavior, perform facial recognition, and the like.

The route control system 535 is configured to determine a traveling route of the vehicle 500. In some embodiments, the route control system 535 may combine data from the sensor, the positioning system 521, and one or more predetermined maps to determine the traveling route of the vehicle 500.

The obstacle avoidance system 536 is configured to identify, evaluate, and avoid or bypass a potential obstacle in the environment of the vehicle 500 in another manner.

Certainly, in an example, the control system 530 may add or alternatively include components other than the components shown and described. Alternatively, the control system 530 may remove some of the components shown above.

The vehicle 500 interacts with an external sensor, another vehicle, another computer system, or a user by using the peripheral device 540. The peripheral device 540 may include a wireless communication system 541, a vehicle-mounted computer 542, a microphone 543, and/or a speaker 544.

In some embodiments, the peripheral device 540 provides a means for the user of the vehicle 500 to interact with the user interface 570. For example, the vehicle-mounted computer 542 may provide information to the user of the vehicle 500. The user interface 570 may further operate the vehicle-mounted computer 542 to receive an input from the user. The vehicle-mounted computer 542 may perform an operation by using a touchscreen. In some other embodiments, the peripheral device 540 may provide a means for the vehicle 500 to communicate with another device located in the vehicle. For example, the microphone 543 may receive audio (for example, a voice command or another audio input) from the user of the vehicle 500. Likewise, the speaker 544 may output audio to the user of the vehicle 500.

The wireless communication system 541 may wirelessly communicate with one or more devices directly or through a communication network.

For example, the wireless communication system 541 may use 3rd generation mobile communication technology (the 3rd generation mobile communication technology, 3G) cellular communication, for example, code division multiple access (Code division multiple access, CDMA), a global system for mobile communications (Global System for Mobile Communications, GSM), a general packet radio service (General Packet Radio Service, GPRS), or 4th generation communication technology (the 4th generation mobile communication technology, 4G) cellular communication, for example, long term evolution (long term evolution, LTE), or 5th generation mobile communication technology (the 5th generation mobile communication technology, 5G) cellular communication. The wireless communication system 541 may communicate with a wireless local area network (wireless local area network, WLAN) through wireless fidelity (wireless fidelity, Wi-Fi). In some embodiments, the wireless communication system 541 may directly communicate with a device through an infrared link, Bluetooth, or ZigBee. Other wireless protocols, for example, various vehicle communication systems, such as the wireless communication system 541, may include one or more dedicated short-range communication (dedicated short-range communication, DSRC) devices.

The power supply 550 may provide power to various components of the vehicle 500. In an embodiment, the power supply 550 may be a rechargeable lithium-ion battery or a rechargeable lead-acid battery. One or more battery packs of such batteries may be configured as the power supply to supply power to the components of the vehicle 500. In some other embodiments, the power supply 550 and the energy source 512 may be implemented together, for example, a pure electric vehicle.

Some or all of functions of the vehicle 500 are controlled by the computer system 560. The computer system 560 may include at least one processor 561, and the processor 561 executes instructions 5621 stored in a non-transient computer-readable medium such as a memory 562. The computer system 560 may alternatively be a plurality of computing devices that control individual components or subsystems of the vehicle 500 in a distributed manner.

The processor 561 may be any conventional processor, such as a commercially available central processing unit (processing unit, CPU). Optionally, the processor may be a dedicated device, for example, an application-specific integrated circuit (application-specific integrated circuit, ASIC) or another hardware-based processor.

In some embodiments, the memory 562 may include the instructions 5621 (for example, program logic), and the instructions 5621 may be executed by the processor 561 to perform various functions of the vehicle 500. The memory 562 may further include additional instructions, including instructions for sending send data to, receiving data from, interacting with, and/or controlling one or more of the travel system 510, the sensor system 520, the control system 530, and the peripheral device 540.

In addition to the instructions 5621, the memory 562 may further store data, such as a road map, route information, a location, a direction, a speed, and other vehicle data of a vehicle, and other information. Such information may be used by the vehicle 500 and the computer system 560 when the vehicle 500 operates in an autonomous mode, a semi-autonomous mode, and/or a manual mode.

The user interface 570 is used to provide information for or receive information from the user of the vehicle 500. Optionally, the user interface 570 may include an interface for one or more input/output devices within a set of the peripheral devices 540 to interact and exchange information with the user. The one or more input/output devices in the set of the peripheral devices 540 may be, for example, one or more of the wireless communication system 541, the vehicle-mounted computer 542, the microphone 543, and the speaker 544.

The computer system 560 may control functions of the vehicle 500 based on input received from various subsystems (for example, the travel system 510, the sensor system 520, and the control system 530) and from the user interface 570. In some embodiments, the computer system 560 may provide control over many aspects of the vehicle 500 and the subsystems of the vehicle 500.

In some embodiments, the vehicle 500 may further include a vehicle control unit (not shown in FIG. 5). The vehicle control unit may alternatively be described as a power assembly controller, and is a core control component of the vehicle. The vehicle control unit collects an accelerator pedal opening degree, a brake pedal opening degree, and input information of another component, and after making corresponding judgment based on the input information, controls an action of each component in the vehicle 500 to drive the vehicle 500 to travel. Specifically, as a command and management center of the vehicle 500, main functions of the vehicle control unit include: driving torque control, optimization control of braking energy, energy management of the vehicle, maintenance and management of a controller area network (controller area network, CAN), fault diagnosis and processing, vehicle status monitoring, and the like. The vehicle control unit plays a role of controlling vehicle running. Therefore, quality of the vehicle control unit directly determines stability and safety of the vehicle.

Optionally, one or more of the foregoing components may be installed separately from or associated with the vehicle 500. For example, the memory 562 may exist partially or completely separate from the vehicle 500. The foregoing components may be communicatively coupled together in a wired and/or wireless manner.

Optionally, the foregoing components are merely examples. In actual application, components in the foregoing modules may be added or deleted based on an actual requirement. FIG. 5 should not be understood as any limitation on embodiments of this application.

The vehicle 500 may be an electric vehicle, a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

In some other embodiments of this application, the vehicle may further include a hardware structure and/or a software module, and implement the functions in a form of the hardware structure, the software module, or both the hardware structure and the software module. Whether a specific function in the foregoing functions is performed by using the hardware structure, the software module, or the combination of the hardware structure and the software module depends on particular applications and design constraints of the technical solutions.

The following describes the method provided in embodiments of this application with reference to the accompanying drawings.

To optimize a torque control strategy, further improve precision for controlling torque of a vehicle, and improve comfort and stability in a traveling process of the vehicle, this application provides a torque control method. The method may be executed by a vehicle or a device other than a vehicle, or may be a processor on a vehicle or a device other than a vehicle, for example, the processor 41 and the processor 561 mentioned in the foregoing content.

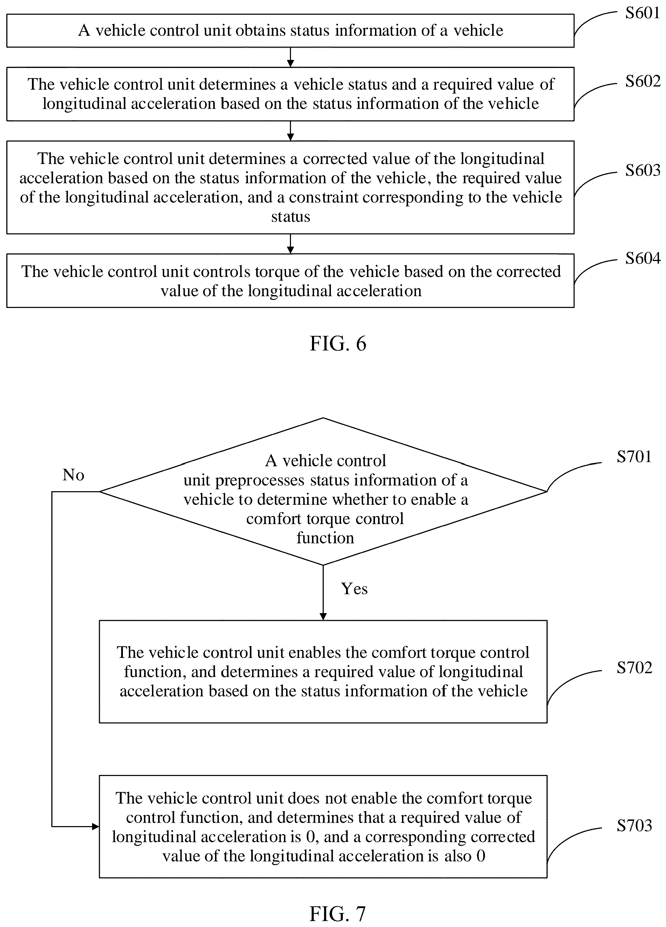

An embodiment of this application is described by using an electric vehicle as an example. FIG. 6 is a schematic flowchart of a torque control method according to an embodiment of this application. The torque control method includes the following S601 to S604.

S601: A vehicle control unit obtains status information of a vehicle.

The vehicle control unit is a core control component of the vehicle. The vehicle control unit obtains the status information of the vehicle, makes corresponding judgment and decision based on the status information of the vehicle, and controls actions of components in the vehicle based on the decision, so as to control traveling or braking of the vehicle.

The status information is status information of the vehicle at a current moment. The status information includes status information such as an active safety function status of the vehicle, a speed of the vehicle, lateral acceleration of the vehicle, longitudinal acceleration of the vehicle, a lateral impact degree of the vehicle, an accelerator pedal opening degree of the vehicle, a brake pedal opening degree of the vehicle, and a gear status of the vehicle.

Optionally, the status information may further include a steering wheel rotation speed of the vehicle, a road grade of a road on which the vehicle is located, radar information, and the like.

The active safety function status indicates whether the vehicle enables an active safety function.

Optionally, the active safety function may be classified into an alarm prompt type and an active intervention type. For example, the alarm prompt type includes a forward collision warning system (forward collision warning system, FCWS), a lane departure warning system (lane departure warning system, LDWS), and blind spot detection (blind spot detection, BSD); and the active intervention type includes an electronic stability program (electronic stability program, ESP), an anti-lock braking system (anti-lock braking system, ABS), a traction control system (traction control system, TCS), an advanced driver assistant system (advanced driver assistant system, ADAS), automatic emergency brake (Automatic Emergency Brake, AEB), and adaptive cruise control (Adaptive Cruise Control, ACC).

For example, the ADAS is an active safety technology that can perform intelligent image analysis by using an AI algorithm. Sensors such as a radar, a camera, a lidar, ultrasonic, and a GPS on the vehicle are used to collect environment data inside and outside the vehicle, and perform technical processing such as identification and detection of static and dynamic objects. Active judgment and preventive measures are made before a driver's subjective reaction, to achieve a role of prevention and assistance, so as to avoid traffic accidents from occurring.

Optionally, the active safety function status of the vehicle may be indicated by using a flag bit.

In some examples, a flag bit is set for the active safety function status, and a value of the flag bit indicates whether the vehicle enables the active safety function. For example, if the flag bit of the active safety function status is 1, it indicates that the vehicle enables any one or more functions of the active safety function. If the flag bit of the active safety function status is 0, it indicates that the vehicle does not enable the active safety function. Alternatively, if the flag bit of the active safety function status is 0, it indicates that the vehicle enables any one or more functions of the active safety function. If the flag bit of the active safety function status is 1, it indicates that the vehicle does not enable the active safety function. This is not specifically limited in embodiments of this application.

In some other examples, a flag bit is set for each function status in the active safety function, and a value of the flag bit indicates whether the vehicle enables the active safety function status. For example, if all flag bits corresponding to all function statuses in the active safety function are 1, or flag bits corresponding to some function statuses are 1, it indicates that the vehicle enables the active safety function status. For example, if all flag bits corresponding to all function statuses in the active safety function are 0, it indicates that the vehicle does not enable the active safety function. A manner of representing the active safety function status is not limited in embodiments of this application.

It may be understood that safe traveling is most important for the vehicle. Therefore, a priority of the active safety function is higher than that of comfort driving and riding. When the vehicle enables any one of the active safety functions, it indicates that the vehicle preferentially considers a safety factor, and comfort of the vehicle is not considered temporarily.

The lateral impact degree indicates a tilt degree of the vehicle when the vehicle turns. A greater lateral impact degree indicates a greater tilt degree of the vehicle.

In a possible implementation, the lateral impact degree is obtained by performing derivation on the lateral acceleration.

The accelerator pedal opening degree indicates a degree of stepping on an accelerator by a user. The brake pedal opening degree indicates a degree of stepping on a brake by the user.

For example, if the accelerator pedal opening degree of the vehicle is 0, it indicates that the user does not step on the accelerator at the current moment, and the vehicle does not accelerate. If the accelerator pedal opening degree of the vehicle is greater than 0, it indicates that the user steps on the accelerator at the current moment, and the vehicle is in an acceleration state. A larger accelerator pedal opening degree indicates that the user steps on the accelerator more forcibly and a speed of the vehicle is faster. Similarly, if the brake pedal opening degree of the vehicle is 0, it indicates that the user does not step on the brake at the current moment, and the vehicle does not decelerate. If the brake pedal opening degree of the vehicle is greater than 0, it indicates that the user steps on the brake at the current moment, and the vehicle is in a brake state. A larger brake pedal opening degree indicates that the user steps on the brake more forcibly, the user has a more urgent deceleration requirement, and a speed of the vehicle decreases faster.

The gear status includes gears such as a reverse gear, a drive gear, a parking gear, and a neutral gear. A moving direction of the vehicle and a moving status of the vehicle may be determined based on a specific gear. For example, if the gear status is the reverse gear, it indicates that the vehicle moves backwards and the vehicle is reversed.

Optionally, the gear status of the vehicle may be indicated by using a flag bit. For example, a flag bit of the reverse gear is 0, a flag bit of the drive gear is 1, a flag bit of the parking gear is 2, and a flag bit of the neutral gear is 3. This is not specifically limited in embodiments of this application.

In some embodiments of this application, the vehicle control unit obtains the status information of the vehicle by using various sensors mounted on the vehicle.

In a possible implementation, the vehicle control unit obtains real-time data monitored by various sensors on the vehicle, and obtains the status information of the vehicle through calculation based on the real-time data.

Optionally, the sensor on the vehicle includes but is not limited to a wheel speed sensor, a steering wheel angle sensor, an accelerator pedal position sensor, a brake pedal position sensor, a sensor for measuring longitudinal acceleration and lateral acceleration, and the like.

For example, the vehicle control unit obtains real-time data (such as a speed, acceleration, an accelerator pedal, and a brake pedal) monitored by a sensor (such as an accelerometer, a speed sensor, or an angle sensor) on the vehicle, the vehicle control unit calculates and determines information such as the speed of the vehicle, the lateral acceleration of the vehicle, the longitudinal acceleration of the vehicle, the lateral impact degree of the vehicle, the accelerator pedal opening degree of the vehicle, and the brake pedal opening degree of the vehicle based on the monitored real-time data.

Optionally, the vehicle control unit obtains data detected by a dead reckoning (dead reckoning, DR) sensor, and performs calculation on the detected data by using a DR technology, to obtain the status information of the vehicle.

The DR sensor is a sensor that uses collected data for dead reckoning. The DR sensor may be a sensor in a vehicle sensing system, for example, a gyroscope, an accelerometer, a speed sensor, a GPS sensor, and a visual sensor. The DR technology is a common positioning technology, and a basic principle of the DR technology is to calculate an instantaneous location of a vehicle by using data collected by sensors such as a direction sensor and a speed sensor, to implement continuous autonomous positioning of the vehicle.

In some other embodiments of this application, the vehicle control unit directly obtains the status information of the vehicle from various subsystems of the vehicle. For example, in the foregoing example of the vehicle 500, the vehicle control unit obtains information such as the active safety function status of the vehicle, the accelerator pedal opening degree of the vehicle, the brake pedal opening degree of the vehicle, and the gear status of the vehicle from the sensor system 520, the control system 530, and another subsystem of the vehicle 500.

S602: The vehicle control unit determines a vehicle status and a required value of the longitudinal acceleration based on the status information of the vehicle.

The vehicle status is a current traveling status of the vehicle. The vehicle status includes a driving state, a braking state, and a coasting state.

In some examples, the driving state may be a state in which the vehicle accelerates, for example, the user steps on an accelerator to accelerate the vehicle. The braking state may be a state in which the vehicle decelerates, for example, the user steps on a brake to decelerate the vehicle. The coasting state may be a state in which the user does not step on an accelerator or a brake, that is, a state in which the vehicle travels normally. The coasting state includes an energy recovery state.

It may be understood that an application scenario of this embodiment of this application is a turning scenario. In the turning scenario, a vehicle usually decelerates or maintains a vehicle speed, so that the vehicle smoothly and safely passes through a bend.

Therefore, for this application scenario, a vehicle status corresponding to a conventional operation is the braking state and the coasting state, and a vehicle status corresponding to an unconventional operation is the driving state. If classification is performed based on the conventional operation and the non-conventional operation, the vehicle status may be classified into the driving state corresponding to the non-conventional operation, and the braking and coasting state corresponding to the conventional operation. A manner of classifying the vehicle status is not limited in embodiments of this application.

The following uses an example in which the vehicle status includes a driving state and a braking and coasting state for description.

The required value of the longitudinal acceleration is a theoretical value of the vehicle longitudinal acceleration that is determined by the vehicle control unit through calculation based on the status information of the vehicle and that needs to be changed. The required value of the longitudinal acceleration may also be described as a longitudinal acceleration change amount.

In some embodiments of this application, after obtaining the status information of the vehicle, the vehicle control unit determines the vehicle status based on the status information of the vehicle. In an example, the vehicle status is determined based on the brake pedal opening degree or the accelerator pedal opening degree in the status information of the vehicle. For example, if the accelerator pedal opening degree of the vehicle is greater than 0, the vehicle is in the driving state. If the brake pedal opening degree of the vehicle is greater than 0, the vehicle is in the braking and coasting state.

In some other embodiments of this application, for a specific implementation in which the vehicle control unit determines the required value of the longitudinal acceleration based on the status information of the vehicle after obtaining the status information of the vehicle, refer to the following descriptions.

It should be noted that a sequence in which the vehicle control unit determines the vehicle status and the required value of the longitudinal acceleration is not limited in embodiments of this application.

Optionally, with reference to FIG. 7, the foregoing step S602 in which the vehicle control unit determines the required value of the longitudinal acceleration based on the status information of the vehicle may be specifically implemented as the following steps S701 to S703.

S701: The vehicle control unit preprocesses the status information of the vehicle to determine whether to enable a comfort torque control function. If it is determined to enable the comfort torque control function, the vehicle control unit performs S702; or if it is determined not to enable the comfort torque control function, the vehicle control unit performs S703.

In some embodiments of this application, after obtaining the status information of the vehicle, the vehicle control unit preprocesses the status information of the vehicle, and determines whether the status information of the vehicle meets a trigger condition. If the status information of the vehicle meets the trigger condition, the vehicle control unit enters a comfort torque control mode, and the vehicle control unit enables the comfort torque control function.

Optionally, the vehicle control unit determines whether each piece of status information meets a trigger condition corresponding to the status information. If each piece of status information meets the trigger condition corresponding to the status information, the vehicle control unit enters the comfort torque control mode, and enables the comfort torque control function; or if at least one piece of status information does not meet the trigger condition corresponding to the status information, the vehicle control unit does not enter the comfort torque control mode, and does not enable the comfort torque control function.

Optionally, when the vehicle control unit determines that each piece of status information of the vehicle meets the trigger condition corresponding to the status information, the vehicle control unit enters the comfort torque control mode, and the vehicle control unit enables the comfort torque control function. After the vehicle control unit enables the comfort torque control function, the vehicle control unit may determine a corrected value of the longitudinal acceleration based on the status information, and control torque of the vehicle based on the corrected value of the longitudinal acceleration.

Optionally, the status information of the vehicle is represented by using a flag bit, a standard flag bit is also set for each trigger condition, and whether to enable the comfort torque control function is determined by comparing the flag bit corresponding to the status information of the vehicle with the standard flag bit.

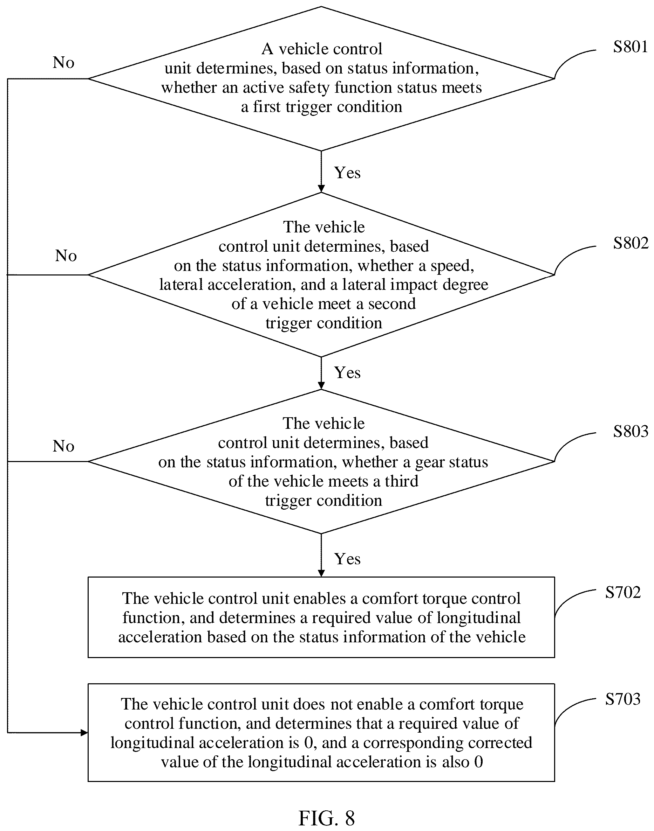

Optionally, with reference to FIG. 8, step S701 in which the vehicle control unit preprocesses the status information of the vehicle to determine whether to enable the comfort torque control function may be specifically implemented as the following steps:

S801: The vehicle control unit determines, based on the status information, whether the active safety function status meets a first trigger condition. If the active safety function status meets the first trigger condition, the vehicle control unit performs S802; or if the active safety function status does not meet the first trigger condition, the vehicle control unit performs S703.

The first trigger condition is a preset determining condition corresponding to the active safety function status. The first trigger condition is used to determine whether the status information can trigger the vehicle to enable the comfort torque control function.

In this embodiment of this application, the first trigger condition is that each active safety function status is equal to a first threshold. The first threshold is a preset value, and indicates that the vehicle does not enable the active safety function.

Optionally, when determining that each active safety function status is equal to the first threshold, the vehicle control unit determines that the active safety function status meets the first trigger condition, and then the vehicle control unit determines that the vehicle does not enable the active safety function.

For example, based on the example in S601, the vehicle control unit sets a flag bit for each function status in the active safety function in advance, and sets the first threshold to 0. When determining that the flag bit corresponding to each function status in the active safety function is 0 (that is, the flag bit corresponding to each function status is equal to the first threshold), the vehicle control unit determines that the vehicle does not enable the active safety function, and the active safety function status of the vehicle meets the first trigger condition. Then, the vehicle control unit retains the active safety function status, and performs S802; otherwise, the vehicle control unit performs S703.

In this way, a case in which the active safety function of the vehicle intervenes in the bend scenario is considered. If the vehicle enables an active safety function in the bend scenario, safety is primarily considered, and comfort target torque control is smoothly exited, so that safety performance of the vehicle can be ensured.

S802: The vehicle control unit determines, based on the status information, whether the speed, the lateral acceleration, and the lateral impact degree of the vehicle meet a second trigger condition. If the speed, the lateral acceleration, and the lateral impact degree of the vehicle meet the second trigger condition, the vehicle control unit performs S803; or if the speed, the lateral acceleration, and the lateral impact degree of the vehicle do not meet the second trigger condition, the vehicle control unit performs S703.

The second trigger condition is also used to determine whether the status information can trigger the vehicle to enable the comfort torque control function. The second trigger condition includes a first condition, a second condition, and a third condition. The first condition is a preset determining condition corresponding to the speed; the second condition is a preset determining condition corresponding to the lateral acceleration; and the third condition is a preset determining condition corresponding to the lateral impact degree.

In this embodiment of this application, if the vehicle control unit determines that the speed of the vehicle meets the first condition, the lateral acceleration of the vehicle meets the second condition, and the lateral impact degree of the vehicle meets the third condition, the vehicle control unit determines that the speed, the lateral acceleration, and the lateral impact degree of the vehicle meet the second trigger condition, retains the speed, the lateral acceleration, and the lateral impact force of the vehicle, and performs S803; otherwise, the vehicle control unit determines that the speed, the lateral acceleration, and the lateral impact degree of the vehicle do not meet the second trigger condition, and performs S703.

In some examples, the first condition is a safe speed range of the vehicle when the vehicle turns. If the vehicle control unit determines that the speed of the vehicle is within the safe speed range, the vehicle control unit determines that the current speed of the vehicle meets the first condition, retains the speed of the vehicle, and continues to determine whether the lateral acceleration of the vehicle meets the second condition; otherwise, the vehicle control unit determines that the current speed of the vehicle does not meet the first condition, and performs S703.

In some other examples, the second condition is a safe lateral acceleration range of the vehicle when the vehicle turns. If the vehicle control unit determines that the lateral acceleration of the vehicle is within the safe lateral acceleration range, the vehicle control unit determines that the current lateral acceleration of the vehicle meets the second condition, retains the lateral acceleration of the vehicle, and continues to determine whether the lateral impact degree of the vehicle meets the third condition; otherwise, the vehicle control unit determines that the current lateral acceleration of the vehicle does not meet the second condition, and performs S703.

In some other examples, the third condition is a safe lateral impact degree range of the vehicle when the vehicle turns. If the vehicle control unit determines that the lateral impact degree of the vehicle is within the safe lateral impact degree range, the vehicle control unit determines that the current lateral impact degree of the vehicle meets the third condition, retains the lateral impact degree of the vehicle, and performs S803; otherwise, the vehicle control unit determines that the current lateral impact degree of the vehicle does not meet the third condition, and performs S703.

A sequence in which the vehicle control unit determines whether the speed meets the first condition, whether the lateral acceleration meets the second condition, and whether the lateral impact degree meets the third condition is not limited in embodiments of this application. When the vehicle control unit determines that the speed, the lateral acceleration, and the lateral impact degree all meet the corresponding conditions, the vehicle control unit determines that the second trigger condition is met.

Optionally, the vehicle control unit indicates a speed status, a lateral acceleration status, and a lateral impact degree status of the vehicle by using a flag bit, and determines, based on the flag bit, whether the speed, the lateral acceleration, and the lateral impact degree meet the second trigger condition.

For example, when the vehicle control unit presets flag bits of the speed status, the lateral acceleration status, and the lateral impact degree status to 1, it indicates that the speed, the lateral acceleration, and the lateral impact degree meet the second trigger condition.

Specifically, when the speed of the vehicle meets the first condition, the vehicle control unit determines that the flag bit of the current speed status of the vehicle is 1; when the lateral acceleration of the vehicle meets the second condition, the vehicle control unit determines that the flag bit of the current lateral acceleration status of the vehicle is 1; or when the lateral impact degree of the vehicle meets the third condition, the vehicle control unit determines that the flag bit of the current lateral impact degree status of the vehicle is 1. When the flag bits of the speed status, the lateral acceleration status, and the lateral impact degree status are all 1, the vehicle control unit determines that the speed, the lateral acceleration, and the lateral impact degree of the vehicle meet the second trigger condition, retains corresponding data information, and performs S803; otherwise, the vehicle control unit determines that the speed, the lateral acceleration, and the lateral impact degree do not meet the second trigger condition, and performs S703. A sequence of determining the speed status, the lateral acceleration status, and the lateral impact degree status is not limited in embodiments of this application.

S803: The vehicle control unit determines, based on the status information, whether the gear status of the vehicle meets a third trigger condition. If the gear status of the vehicle meets the third trigger condition, the vehicle control unit performs S702; or if the gear status of the vehicle does not meet the third trigger condition, the vehicle control unit performs S703.

The third trigger condition is a preset determining condition corresponding to the gear status. The third trigger condition is also used to determine whether the status information can trigger the vehicle to enable the comfort torque control function.

In this embodiment of this application, the third trigger condition is that the gear status of the vehicle is equal to a second threshold. The second threshold is a preset value corresponding to the gear status during normal traveling of the vehicle.

Optionally, when the gear status of the vehicle is equal to the second threshold, the vehicle control unit determines that the gear status meets the third trigger condition.

For example, based on the foregoing example of S601, if a gear corresponding to the second threshold is a neutral gear, the second threshold is 3. When a flag bit of the gear status is the same as the second threshold, the vehicle control unit determines that the current gear status of the vehicle meets the third trigger condition, retains the gear status, and performs S702; otherwise, the vehicle control unit performs S703. In this embodiment of this application, the vehicle control unit preprocesses the status information of the vehicle. The vehicle control unit determines, based on each piece of status information of the vehicle, whether the status information meets a corresponding trigger condition. If each piece of status information meets the trigger condition corresponding to the status information, the vehicle control unit determines to enable the comfort torque control function; or if at least one piece of status information does not meet the corresponding trigger condition, vehicle control unit determines not to enable the comfort torque control function.

In this way, the vehicle control unit determines, based on A preprocessing result of the status information of the vehicle in step S801 to step S803, whether to enable the comfort torque control function, to meet different requirements of the user.

A specific implementation in which the vehicle control unit determines, based on the status information, whether to enable the comfort torque control function is not limited in embodiments of this application. When each piece of status information meets a corresponding trigger condition, the vehicle control unit determines to enable the comfort torque control function.

It should be noted that an execution sequence of step S801, step S802, and step S803 is not limited in embodiments of this application. If the corresponding trigger condition in any one of step S801, step S802, and step S803 is not met, it may be determined that the current vehicle status does not meet a requirement for enabling the comfort torque control function, and the vehicle control unit directly performs S703. Only when the corresponding trigger condition in each of step S801, step S802, and step S803 is met, it may be determined that the current vehicle status meets the requirement for enabling the comfort torque control function, and the vehicle control unit performs S702.

S702. The vehicle control unit enables the comfort torque control function, and determines the required value of the longitudinal acceleration based on the status information of the vehicle.

In some embodiments of this application, the vehicle control unit inputs the lateral acceleration and the lateral impact degree of the vehicle into a dynamical model, to obtain the required value of the longitudinal acceleration of the vehicle. The dynamical model indicates a motion rule of the vehicle.

In a possible implementation, the dynamical model is $LgtA_{\_c} = -\mathrm{sgn}(a_y, \dot{a}_y)|\dot{a}_y|$, where $LgtA_{\_c}$ represents the required value of the longitudinal acceleration of the vehicle, $a_y$ represents the lateral acceleration of the vehicle, $\dot{a}_y$ represents the lateral impact degree of the vehicle, and sgn is a symbol function. The lateral acceleration and the lateral impact degree in the status information obtained in step S601 are input into the dynamical model, so that the required value of the longitudinal acceleration of the vehicle can be obtained through calculation.

S703: The vehicle control unit does not enable the comfort torque control function, and determines that the required value of the longitudinal acceleration is 0, and the corresponding corrected value of the longitudinal acceleration is also 0.

In some examples, after determining not to enable the comfort torque control function, the vehicle control unit determines that the required value of the longitudinal acceleration is 0, and the corresponding corrected value of the longitudinal acceleration is also 0. The longitudinal acceleration of the vehicle does not need to be adjusted, and the torque is controlled based on the current actual longitudinal acceleration of the vehicle.

Optionally, the vehicle control unit senses a radius and a curvature of the bend in advance based on the radar information in the obtained status information, and determines an intervention occasion and an intervention operation of the comfort torque control function based on the radius and the curvature of the bend.

Optionally, if the vehicle enables a self-driving function, the vehicle control unit may sense the bend, and the radius and the curvature of the bend in advance based on path planning in the self-driving function, and determine the intervention occasion and the intervention operation of the comfort torque control function based on the radius and the curvature of the bend.

In this way, the vehicle control unit senses the bend in advance based on the information collected by the vehicle and the function enabled by the vehicle, and comfort torque control is performed in advance, to further improve precision for controlling the torque of the vehicle, so that the vehicle passes through the bend more smoothly, and comfort of the vehicle is improved.

In this way, after the required value of the longitudinal acceleration in step S603 is determined by using the foregoing step S701 to step S703, the following step S603 may be performed to determine the corrected value of the longitudinal acceleration based on the required value of the longitudinal acceleration.

S603: The vehicle control unit determines the corrected value of the longitudinal acceleration based on the status information of the vehicle, the required value of the longitudinal acceleration, and a constraint corresponding to the vehicle status.

The constraint is a corresponding requirement that is set based on different vehicle statuses and that is used to determine the corrected value of the longitudinal acceleration.

In this embodiment of this application, the vehicle control unit determines, based on the status information, the required value of the longitudinal acceleration, and the vehicle status, whether the constraint corresponding to the vehicle status is met. If it is determined that the vehicle status is the driving state, and the status information and the required value of the longitudinal acceleration meet a constraint corresponding to the driving state, the vehicle control unit determines the required value of the longitudinal acceleration as the corrected value of the longitudinal acceleration; or if it is determined that the vehicle status is the driving state, but the status information and the required value of the longitudinal acceleration do not meet a constraint corresponding to the driving state, the vehicle control unit determines that the corrected value of the longitudinal acceleration is 0; or if it is determined that the vehicle status is the braking and coasting state, and the status information and the required value of the longitudinal acceleration meet a constraint corresponding to the braking and coasting state, the vehicle control unit determines the required value of the longitudinal acceleration as the corrected value of the longitudinal acceleration; or if it is determined that the vehicle status is the braking state and coasting state, but the status information and the required value of the longitudinal acceleration do not meet a constraint corresponding to the braking and coasting state, the vehicle control unit determines the corrected value of the longitudinal acceleration from a calibration map table based on the status information of the vehicle.

In some embodiments of this application, before determining the corrected value of the longitudinal acceleration based on the status information of the vehicle, the required value of the longitudinal acceleration, and the constraint corresponding to the vehicle status, the vehicle control unit may further determine an accelerator pedal flag bit and a brake pedal flag bit.

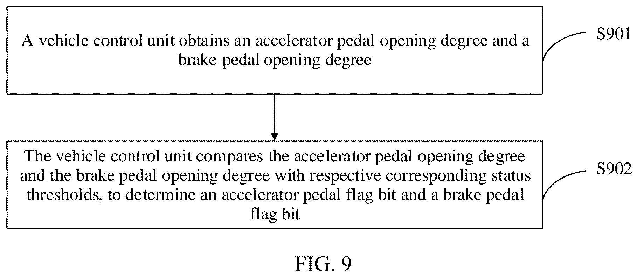

FIG. 9 is a flowchart of a method for determining an accelerator pedal flag bit and a brake pedal flag bit according to an embodiment of this application.

S901: The vehicle control unit obtains the accelerator pedal opening degree and the brake pedal opening degree.

S902: The vehicle control unit compares the accelerator pedal opening degree and the brake pedal opening degree with respective corresponding status thresholds, to determine the accelerator pedal flag bit and the brake pedal flag bit.

In a possible implementation, the vehicle control unit determines the accelerator pedal flag bit based on the accelerator pedal opening degree and a first status threshold; and the vehicle control unit determines the brake pedal flag bit based on the brake pedal opening degree and a second status threshold.

The first status threshold is a critical value of the accelerator pedal during turning. The second status threshold is a critical value of the brake pedal during turning.

In some examples, if the accelerator pedal opening degree is greater than the first status threshold, the vehicle control unit determines that the accelerator pedal flag bit (which may also be described as an acceleration pedal flag bit) is 1. For example, FlagAPP=1, where FlagAPP represents the acceleration pedal flag bit. Correspondingly, if the accelerator pedal opening degree is less than or equal to the first status threshold, the vehicle control unit determines that the accelerator pedal flag bit is 0, that is, FlagAPP=0.

In some other examples, if the brake pedal opening degree is greater than the second status threshold, the vehicle control unit determines that the brake pedal flag bit is 1. For example, FlagBKP=1, where FlagBKP represents the brake pedal flag bit. Correspondingly, if the brake pedal opening degree is less than or equal to the second status threshold, the vehicle control unit determines that the brake pedal flag bit is 0, that is, FlagBKP=0.

In this way, based on the foregoing step S901 and step S902, after determining the accelerator pedal flag bit and the brake pedal flag bit, the vehicle control unit determines the corrected value of the longitudinal acceleration based on the status information of the vehicle, the required value of the longitudinal acceleration, and the constraint corresponding to the vehicle status.

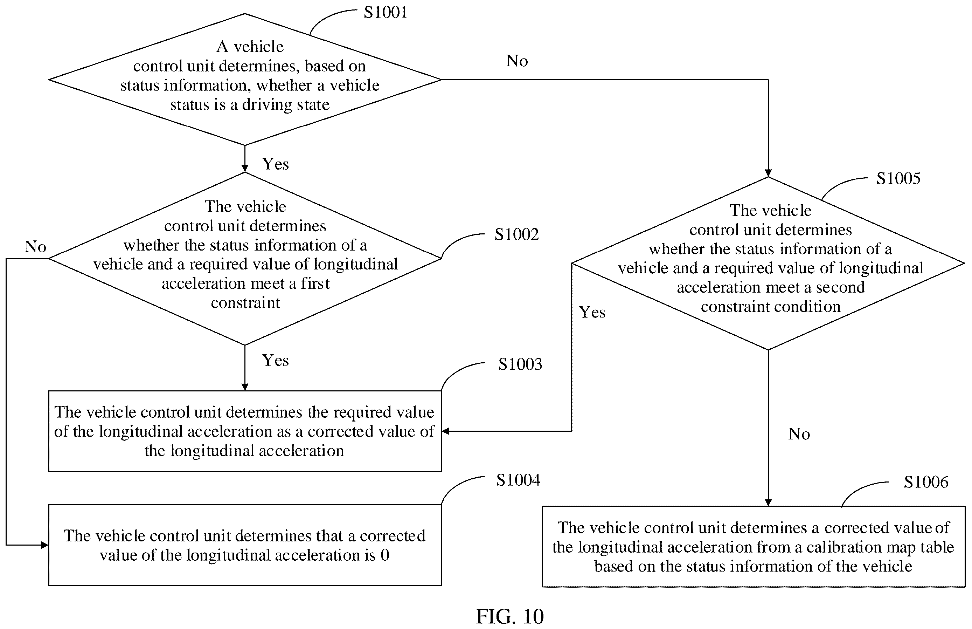

Optionally, with reference to FIG. 10, step S603 in which the vehicle control unit determines the corrected value of the longitudinal acceleration based on the vehicle status information, the required value of the longitudinal acceleration, and the constraint corresponding to the vehicle status may be specifically implemented as the following steps:

S1001: The vehicle control unit determines, based on the status information, whether the vehicle status is the driving state. If the vehicle status is the driving state, the vehicle control unit performs S1002; or if the vehicle status is not the driving state, the vehicle control unit performs S1005.
Specifically, when determining that the vehicle status is the driving state, the vehicle control unit performs S1002; otherwise, the vehicle control unit performs S1005.
S1002: The vehicle control unit determines whether the status information of the vehicle and the required value of the longitudinal acceleration meet a first constraint. If the status information of the vehicle and the required value of the longitudinal acceleration meet the first constraint, the vehicle control unit performs S1003. If the status information of the vehicle and the required value of the longitudinal acceleration do not meet the first constraint, the vehicle control unit performs S1004.

The first constraint is a corresponding requirement that corresponds to the driving state and that is for determining the corrected value of the longitudinal acceleration.

In some embodiments of this application, when the vehicle status is the driving state, the first constraint is that the required value of the longitudinal acceleration is greater than 0 and the accelerator pedal opening degree is greater than the first status threshold.

For the first status threshold, refer to S902. Details are not described herein again.

Based on content in S901 and S902, when the accelerator pedal opening degree is greater than the first status threshold, the accelerator pedal flag bit is 1. In other words, with reference to content of S901 and S902, the first constraint may also be described as follows: The required value of the longitudinal acceleration is greater than 0 and the accelerator pedal flag bit is 1. Correspondingly, the first constraint corresponding to the vehicle status that is the driving state is $LgtA_c>0$ && FlagAPP==1, where $LgtA_c$ is the required value of the longitudinal acceleration of the vehicle obtained through calculation in step S702, and FlagAPP==1 indicates that the accelerator pedal flag bit is 1.

Specifically, when the vehicle control unit determines that the status information of the vehicle (that is, the accelerator pedal opening degree is greater than the first status threshold, or the accelerator pedal flag bit is 1) and the required value of the longitudinal acceleration (that is, the required value of the longitudinal acceleration is greater than 0) meet the first constraint, the vehicle control unit performs S1003; otherwise, the vehicle control unit performs S1004.

It may be understood that when the vehicle status is the driving state, if the user steps on the accelerator, the speed of the vehicle gradually increases. Therefore, the longitudinal acceleration of the vehicle gradually increases, and the required value of the longitudinal acceleration needs to be greater than 0. In this way, the changed longitudinal acceleration is greater than the longitudinal acceleration at the current moment, so that the vehicle speed increases.

S1003: The vehicle control unit determines the required value of the longitudinal acceleration as the corrected value of the longitudinal acceleration.

S1004: The vehicle control unit determines that the corrected value of the longitudinal acceleration is 0.

S1005: The vehicle control unit determines whether the status information of the vehicle and the required value of the longitudinal acceleration meet a second constraint. If the status information of the vehicle and the required value of the longitudinal acceleration meet the second constraint, the vehicle control unit performs S1003. If the status information of the vehicle and the required value of the longitudinal acceleration do not meet the second constraint, the vehicle control unit performs S1006.

The second constraint is a corresponding requirement that corresponds to the braking and coasting state and that is for determining the corrected value of the longitudinal acceleration.

In some embodiments of this application, when the vehicle status is the braking and coasting state, the second constraint is that the required value of the longitudinal acceleration is less than 0, the brake pedal opening degree is greater than the second status threshold, and a derivative of the required value of the longitudinal acceleration is less than a derivative of actual longitudinal acceleration.

The derivative of the required value of the longitudinal acceleration is obtained by performing derivation on the required value of the longitudinal acceleration, and is theoretical data obtained through calculation based on a model.

The derivative of the actual longitudinal acceleration is obtained by performing derivation on actual longitudinal acceleration of the vehicle at the current moment, and is actual data of the vehicle at the current moment.

For the second status threshold, refer to S902. Details are not described herein again.

Based on content in S901 and S902, when the brake pedal opening degree is greater than the second status threshold, the brake pedal flag bit is 1. In other words, with reference to content of S901 and S902, the first constraint may also be described as follows: The required value of the longitudinal acceleration is less than 0, the accelerator pedal flag bit is 1, and the derivative of the required value of the longitudinal acceleration is less than the derivative of the actual longitudinal acceleration. Correspondingly, the second constraint corresponding to the vehicle status that is the braking and coasting state may also be described as LgtA $_c$<0 && $\dot{LgtA}_c$ is less than the derivative of the actual longitudinal acceleration. Herein, LgtA $_c$ is the required value of the longitudinal acceleration of the vehicle obtained through calculation in step S702, FlagAPP==1 indicates that the accelerator pedal flag bit is 1, and $\dot{LgtA}_c$ is the derivative of the required value of the longitudinal acceleration obtained by performing derivation on the required value of the longitudinal acceleration.

Specifically, when the vehicle control unit determines that the status information of the vehicle (that is, the brake pedal opening degree is greater than the second status threshold, or the brake pedal flag bit is 1), the required value of the longitudinal acceleration (that is, the required value of the longitudinal acceleration is less than 0), and the derivative of the required value of the longitudinal acceleration (that is, the derivative of the required value of the longitudinal acceleration is less than the derivative of the actual longitudinal acceleration) all meet the second constraint, the vehicle control unit performs S1003. When the vehicle control unit determines that the status information of the vehicle (that is, the brake pedal opening degree is greater than the second status threshold, or the brake pedal flag bit is 1), the required value of the longitudinal acceleration (that is, the required value of the longitudinal acceleration is less than 0), and the derivative of the required value of the longitudinal acceleration (that is, the derivative of the required value of the longitudinal acceleration is greater than or equal to the derivative of the actual longitudinal acceleration) do not meet the second constraint, the vehicle control unit performs S1006.

It may be understood that when the vehicle status is the braking and coasting state, if the user steps on a brake, the vehicle speed gradually decreases. Therefore, the longitudinal acceleration of the vehicle gradually decreases, and the required value of the longitudinal acceleration needs to be less than 0. In this way, the changed longitudinal acceleration is less than the longitudinal acceleration at the current moment, so that the vehicle speed decreases.

Optionally, the status information obtained by the vehicle includes the actual longitudinal acceleration of the vehicle at the current moment, and performs derivation on the actual longitudinal acceleration to obtain the derivative of the actual longitudinal acceleration.

In a possible implementation, the vehicle control unit determines a deviation of the derivative of the required value of the longitudinal acceleration based on the derivative of the actual longitudinal acceleration. If the derivative of the required value of the longitudinal acceleration is less than the derivative of the actual longitudinal acceleration, the vehicle control unit determines that the deviation of the derivative of the required value of the longitudinal acceleration is small. If the derivative of the required value of the longitudinal acceleration is greater than or equal to the derivative of the actual longitudinal acceleration, the vehicle control unit determines that the deviation of the derivative of the required value of the longitudinal acceleration is large.

For example, when the vehicle control unit determines that the required value of the longitudinal acceleration is less than 0, the brake pedal flag bit is 1, and the deviation of the derivative of the required value of the longitudinal acceleration is small (that is, LgtA $_c$<0 && FlagBKP==1 && $\dot{LgtA}_c$ deviation is small), the vehicle control unit performs S1003; or when the vehicle control unit determines that the required value of the longitudinal acceleration is less than 0, the brake pedal flag bit is 1, and the deviation of the derivative of the required value of the longitudinal acceleration is large (that is, LgtA$_c$<0 && FlagBKP==1 && $\dot{LgtA}_c$ deviation is large), the vehicle control unit performs S1006.

S1006: The vehicle control unit determines the corrected value of the longitudinal acceleration from the calibration map table based on the status information of the vehicle.

The calibration map table includes a correspondence between the speed of the vehicle, the steering wheel rotation speed of the vehicle, the longitudinal impact degree of the vehicle, and the corrected value of the longitudinal acceleration.

Optionally, the vehicle control unit determines the corresponding corrected value of the longitudinal acceleration from the calibration map table based on the speed of the vehicle, the steering wheel rotation speed of the vehicle, and the lateral impact degree of the vehicle, and determines the corrected value of the longitudinal acceleration in the map table as the corrected value of the longitudinal acceleration that needs to be currently performed by the vehicle.

In this way, after the corrected value of the longitudinal acceleration is determined based on the foregoing step S603, the following step S604 may be performed to adjust and control the torque of the vehicle based on the corrected value of the longitudinal acceleration.

S604: The vehicle control unit controls the torque of the vehicle based on the corrected value of the longitudinal acceleration.

In some embodiments of this application, the vehicle control unit determines a torque adjustment amount based on the corrected value of the longitudinal acceleration.

In a possible implementation, the vehicle control unit determines the torque adjustment amount based on the corrected value of the longitudinal acceleration, a weight of the vehicle, and a tire radius.

Specifically, tau=m*a*r, where tau represents the torque adjustment amount, a represents the corrected value of the intermediate acceleration, and r is the tire radius.

In some other embodiments of this application, the vehicle control unit controls the torque of the vehicle based on the torque adjustment amount.

It may be understood that when the corrected value of the longitudinal acceleration is less than 0, it indicates to decrease the longitudinal acceleration of the vehicle, and a corresponding torque adjustment amount is also less than 0. Therefore, a torque decrease operation is performed based on the torque adjustment amount. When the corrected value of the longitudinal acceleration is greater than 0, it indicates to increase the longitudinal acceleration of the vehicle, and a corresponding torque adjustment amount is also greater than 0. Therefore, a torque increase operation is performed based on the torque adjustment amount. In this way, the torque of the vehicle is dynamically controlled based on the corrected value of the longitudinal acceleration.

In some other embodiments of this application, the vehicle control unit adjusts the torque, for example, increases or decreases the torque, based on a motor driving mode and the corrected value of the longitudinal acceleration.

Optionally, different motor driving modes correspond to different torque adjustment manners.

In some examples, when the motor driving mode of the vehicle is single-motor driving (mostly rear-motor driving), a torque adjustment manner is as follows: A single motor (rear motor) increases or decreases the torque based on the corrected value of the longitudinal acceleration.

In some other examples, when the motor driving mode of the vehicle is dual-motor driving (a front motor and a rear motor are used for driving simultaneously), a torque adjustment manner is as follows: The rear motor decreases the torque based on the corrected value of the acceleration, and the front motor increases the torque based on the corrected value of the acceleration. In addition, when the front motor and the rear motor are used for driving simultaneously, torque decrease is performed on the rear motor, and torque increase is performed on the front motor. This can maximize a lateral force of a front wheel when turning by decreasing the torque, and improve stability.

In this way, the vehicle control unit adaptively adjusts the torque based on the motor driving mode, so that a time lag and a delay of a system can be reduced, a torque change amount can be accurately adjusted, and comfort and stability of the vehicle during turning can be effectively improved.

According to the foregoing process, in this embodiment of this application, the vehicle control unit may determine the vehicle status and the required value of the longitudinal acceleration based on the obtained status information of the vehicle, determine the corrected value of the longitudinal acceleration based on the required value of the longitudinal acceleration and the constraint corresponding to the vehicle status, and finally control the torque of the vehicle based on the corrected value of the longitudinal acceleration. This optimizes the torque control strategy, and further improves precision for controlling the torque of the vehicle, so that comfort and stability in the traveling process of the vehicle are improved. In addition, the control strategy is applicable to an electric vehicle, and a torque of a motor is adaptively adjusted based on a motor driving mode, so that vehicle component wear can be reduced.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the torque control system may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

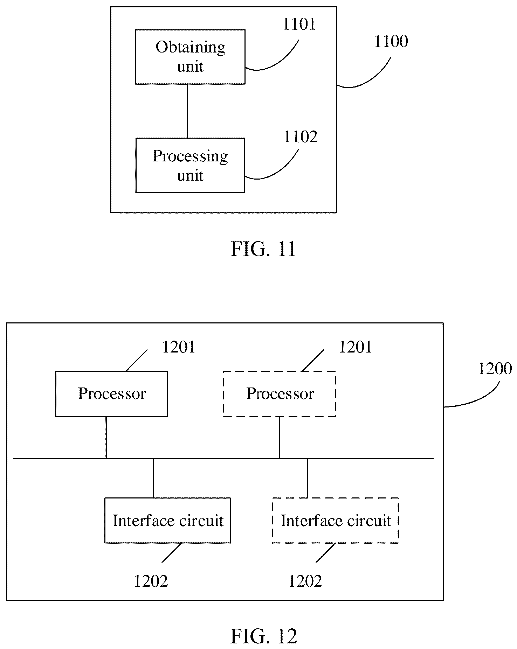

FIG. 11 is a possible diagram of a structure of a torque control apparatus in the foregoing embodiments. As shown in FIG. 11, the torque control apparatus 1100 may include an obtaining unit 1101 and a processing unit 1102. The torque control apparatus 1100 is configured to perform the foregoing torque control method, for example, is configured to perform the torque control method shown in FIG. 6. Certainly, the torque control apparatus may further include another module, or the torque control apparatus may include fewer modules. This is not limited in embodiments of this application.

The obtaining unit 1101 is configured to obtain status information of a vehicle.

Specifically, the obtaining unit 1101 is configured to obtain status information such as an active safety function status of the vehicle, a speed of the vehicle, lateral acceleration of the vehicle, longitudinal acceleration of the vehicle, a lateral impact degree of the vehicle, an accelerator pedal opening degree of the vehicle, a brake pedal opening degree of the vehicle, a gear status of the vehicle, a steering wheel rotation speed of the vehicle, a road grade of a road on which the vehicle is located, and radar information.

The processing unit 1102 is configured to determine a vehicle status and a required value of the longitudinal acceleration based on the status information of the vehicle.

In a possible implementation, the processing unit 1102 is specifically configured to: determine the vehicle status based on the status information of the vehicle; preprocess the status information of the vehicle to determine whether to enable a comfort torque control function; and if the comfort torque control function is enabled, determine the required value of the longitudinal acceleration based on the status information of the vehicle; or if the comfort torque control function is not enabled, determine that the required value of the longitudinal acceleration is 0, and the corresponding corrected value of the longitudinal acceleration is also 0.

In a possible implementation, the processing unit 1102 is further specifically configured to: determine, based on the status information, whether the active safety function status in the status information meets a first trigger condition; if it is determined that the active safety function status meets the first trigger condition, determine, based on the status information, whether the speed, the lateral acceleration, and the lateral impact degree in the status information of the vehicle meet a second trigger condition; otherwise, skip enabling the comfort torque control function; if it is determined that the speed, the lateral acceleration, and the lateral impact degree of the vehicle meet the second trigger condition, determine, based on the status information, whether a gear status in the status information of the vehicle meets a third trigger condition; otherwise, skip enabling the comfort torque control function; and if it is determined that the gear status of the vehicle meets the third trigger condition, determine to enable the comfort torque control function; otherwise, skip enabling the comfort torque control function.

The first trigger condition includes that the active safety function status is equal to a first threshold, where the first threshold indicates that an active safety function is not enabled on the vehicle; the second trigger condition includes that the speed is within a safe speed range, the lateral acceleration is within a safe lateral acceleration range, and the lateral impact degree is within a safe lateral impact degree range; and the third trigger condition includes that the gear status is equal to a second threshold, where the second threshold is a preset value corresponding to the gear status during normal traveling of the vehicle.

The processing unit 1102 is further configured to determine the corrected value of the longitudinal acceleration based on the status information of the vehicle, the required value of the longitudinal acceleration, and a constraint corresponding to the vehicle status.

In a possible implementation, the processing unit 1102 is further specifically configured to: determine, based on the status information, whether the vehicle status is a driving state; and if it is determined that the vehicle status is the driving state, determine whether the status information of the vehicle and the required value of the longitudinal acceleration meet a first constraint; and if it is determined that the status information of the vehicle and the required value of the longitudinal acceleration meet the first constraint, determine the required value of the longitudinal acceleration as the corrected value of the longitudinal acceleration; otherwise, determine that the corrected value of the longitudinal acceleration is 0; or if it is determined that the vehicle status is not the driving state, determine whether the status information of the vehicle and the required value of the longitudinal acceleration meet a second constraint; and if the status information of the vehicle and the required value of the longitudinal acceleration meet the second constraint, determine the required value of the longitudinal acceleration as the corrected value of the longitudinal acceleration; otherwise, determine the corrected value of the longitudinal acceleration from a calibration map table based on the status information of the vehicle.

The processing unit 1102 is further configured to control the torque of the vehicle based on the corrected value of the longitudinal acceleration.

In a possible implementation, the processing unit 1102 is further specifically configured to control the torque of the vehicle based on a motor driving mode and the corrected value of the longitudinal acceleration.

Specifically, if the motor driving mode is single-motor driving, a single motor increases or decreases the torque based on the corrected value of the longitudinal acceleration; or if the motor driving mode is dual-motor driving, a rear motor decreases the torque based on the corrected value of the longitudinal acceleration, or a front motor increases the torque based on the corrected value of the longitudinal acceleration.

Optionally, the torque control apparatus 1100 shown in FIG. 11 may further include a storage unit (not shown in FIG. 11), and the storage unit stores a program or instructions. When the obtaining unit 1101 and the processing unit 1102 execute the program or the instructions, the torque control apparatus 1100 shown in FIG. 11 can perform the torque control method in the foregoing method embodiments.

Operations and/or functions of the units in the torque control apparatus 1100 are separately intended to implement corresponding procedures of the torque control method in the foregoing method embodiments. All related content of the steps in the foregoing method embodiments may be cited in function descriptions of corresponding functional units. For brevity, details are not described herein again.

For a technical effect of the torque control apparatus 1100 shown in FIG. 11, refer to the technical effect of the torque control method in the foregoing method embodiments. Details are not described herein again.

For example, with reference to FIG. 4, functions implemented by the obtaining unit 1101 and the processing unit 1102 in the torque control apparatus 1100 may be implemented by the processor 41 in FIG. 4 by executing the program code in the memory 42 in FIG. 4.

An embodiment of this application further provides a chip system. As shown in FIG. 12, the chip system 1200 includes at least one processor 1201 and at least one interface circuit 1202. In an example, when the chip system 1200 includes one processor and one interface circuit, the processor may be a processor 1201 shown in a solid line box (or a processor 1201 shown in a dashed line box) in FIG. 12, and the interface circuit may be an interface circuit 1202 shown in a solid line box (or an interface circuit 1202 shown in a dashed line box) in FIG. 12. When the chip system 1200 includes two processors and two interface circuits, the two processors include a processor 1201 shown in a solid line box and a processor 1201 shown in a dashed line box in FIG. 12, and the two interface circuits include an interface circuit 1202 shown in a solid line box and an interface circuit 1202 shown in a dashed line box in FIG. 12. This is not limited.

The processor 1201 and the interface circuit 1202 may be connected to each other through a wire. For example, the interface circuit 1202 may be configured to receive a signal. For another example, the interface circuit 1202 may be configured to send a signal to another apparatus (for example, the processor 1201). For example, the interface circuit 1202 may read instructions stored in a memory, and send the instructions to the processor 1201. When the instructions are executed by the processor 1201, the torque control apparatus is enabled to perform the steps in the foregoing embodiments. Certainly, the chip system may further include another discrete component. This is not specifically limited in this embodiment of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or an instruction in a form of software. The steps of the method disclosed with reference to embodiments of this application may be directly performed by a hardware processor, or may be performed through a combination of hardware in the processor and a software module.

An embodiment of this application further provides a computer-readable storage medium that stores one or more computer programs. The one or more computer programs include instructions. When the instructions are executed by a computer, the computer is enabled to perform a corresponding procedure of the torque control method in the foregoing embodiments.

In some embodiments, the disclosed methods may be implemented as computer program instructions encoded in a machine-readable format on a computer-readable storage medium or encoded on another non-transitory medium or product.

An embodiment of this application further provides a computer program product. When the computer program product is run on a computer, the computer is enabled to perform the foregoing related steps, to implement the torque control method in the foregoing embodiments.

The apparatus, the computer-readable storage medium, the computer program product, or the chip provided in embodiments of this application are all configured to perform the corresponding method provided above. Therefore, for beneficial effect that can be achieved, refer to beneficial effect in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, function units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A torque control method, wherein the method comprises:

    obtaining status information of a vehicle;
    determining a vehicle status and a required value of longitudinal acceleration based on the status information of the vehicle;
    determining a corrected value of the longitudinal acceleration based on the status information of the vehicle, the required value of the longitudinal acceleration, and a constraint corresponding to the vehicle status; and
    controlling torque of the vehicle based on the corrected value of the longitudinal acceleration.

2. The torque control method according to claim 1, wherein determining the vehicle status and the required value of the longitudinal acceleration based on the status information of the vehicle comprises:

    determining the vehicle status based on the status information of the vehicle;
    preprocessing the status information of the vehicle to determine whether to enable a comfort torque control function; and
    if the comfort torque control function is enabled, determining the required value of the longitudinal acceleration based on the status information of the vehicle; or

if the comfort torque control function is not enabled, determining that the required value of the longitudinal acceleration is 0, and the corresponding corrected value of the longitudinal acceleration is also 0.

3. The torque control method according to claim 2, wherein preprocessing the status information of the vehicle to determine whether to enable the comfort torque control function comprises:

determining, based on the status information, whether an active safety function status in the status information meets a first trigger condition; if the active safety function status meets the first trigger condition, determining, based on the status information, whether a speed, lateral acceleration, and a lateral impact degree in the status information of the vehicle meet a second trigger condition; otherwise, skipping enabling the comfort torque control function; if the speed, the lateral acceleration, and the lateral impact degree of the vehicle meet the second trigger condition, determining, based on the status information, whether a gear status in the status information of the vehicle meets a third trigger condition; otherwise, skipping enabling the comfort torque control function; and if that the gear status of the vehicle meets the third trigger condition, determining to enable the comfort torque control function; otherwise, skipping enabling the comfort torque control function.

4. The torque control method according to claim 3, wherein the first trigger condition comprises that the active safety function status is equal to a first threshold, wherein the first threshold indicates that an active safety function is not enabled on the vehicle; the second trigger condition comprises that the speed is within a safe speed range, the lateral acceleration is within a safe lateral acceleration range, and the lateral impact degree is within a safe lateral impact degree range; and the third trigger condition comprises that the gear status is equal to a second threshold, wherein the second threshold is a preset value corresponding to the gear status during normal traveling of the vehicle.

5. The torque control method according to any one of claims 1 to 4, wherein determining the corrected value of the longitudinal acceleration based on the status information of the vehicle, the required value of the longitudinal acceleration, and the constraint corresponding to the vehicle status comprises:

determining, based on the status information, whether the vehicle status is a driving state; and if the vehicle status is the driving state, determining whether the status information of the vehicle and the required value of the longitudinal acceleration meet a first constraint; and if the status information of the vehicle and the required value of the longitudinal acceleration meet the first constraint, determining the required value of the longitudinal acceleration as the corrected value of the longitudinal acceleration; otherwise, determining that the corrected value of the longitudinal acceleration is 0; or if the vehicle status is not the driving state, determining whether the status information of the vehicle and the required value of the longitudinal acceleration meet a second constraint; and if the status information of the vehicle and the required value of the longitudinal acceleration meet the second constraint, determining the required value of the longitudinal acceleration as the corrected value of the longitudinal acceleration; otherwise, determining the corrected value of the longitudinal acceleration from a calibration map table based on the status information of the vehicle.

6. The torque control method according to any one of claims 1 to 5, wherein before determining the corrected value of the longitudinal acceleration based on the status information of the vehicle, the required value of the longitudinal acceleration, and the constraint corresponding to the vehicle status, the method further comprises:

obtaining an accelerator pedal opening degree and a brake pedal opening degree in the status information; and comparing the accelerator pedal opening degree and the brake pedal opening degree with respective corresponding status thresholds, to determine an accelerator pedal flag bit and a brake pedal flag bit.

7. The torque control method according to any one of claims 1 to 6, wherein controlling the torque of the vehicle based on the corrected value of the longitudinal acceleration comprises:
controlling the torque of the vehicle based on a motor driving mode and the corrected value of the longitudinal acceleration.

8. The torque control method according to claim 7, wherein controlling the torque of the vehicle based on the motor driving mode and the corrected value of the longitudinal acceleration comprises:

if the motor driving mode is single-motor driving, increasing or decreasing the torque by a single motor based on the corrected value of the longitudinal acceleration; or

if the motor driving mode is dual-motor driving, decreasing the torque by a rear motor based on the corrected value of the longitudinal acceleration, or increasing the torque by a front motor based on the corrected value of the longitudinal acceleration.

9. The torque control method according to any one of claims 1 to 8, wherein the status information comprises one or more of the following: the active safety function status, the speed, the lateral acceleration, the longitudinal acceleration, the lateral impact degree, the accelerator pedal opening degree, the brake pedal opening degree, and the gear status.

10. A torque control apparatus, comprising a processor and a memory, wherein the memory is coupled to the processor, the memory is configured to store computer-readable instructions, and when the processor reads the computer-readable instructions from the memory, the torque control apparatus is enabled to perform the method according to any one of claims 1 to 9.

11. A transportation means, wherein the transportation means comprises the torque control apparatus according to claim 10.

12. A chip system, comprising at least one processor and at least one interface circuit, wherein the at least one interface circuit is configured to perform a transceiver function and send instructions to the at least one processor, and when the at least one processor executes the instructions, the at least one processor is enabled to perform the method according to any one of claims 1 to 9.

13. A computer-readable storage medium, wherein the computer-readable storage medium comprises a computer program, and when the computer program is run on a computer, the computer is enabled to perform the method according to any one of claims 1 to 9.

14. A computer program product, wherein when the computer program product runs on a computer, the computer is enabled to perform the method according to any one of claims 1 to 9.

Obtain status information of a vehicle

Determine a corrected amount of longitudinal acceleration based on the status information of the vehicle

Determine whether the corrected amount of the longitudinal acceleration meets a preset condition

No

Yes

Adjust torque of an engine based on the corrected amount of the longitudinal acceleration

Determine that the corrected amount of the longitudinal acceleration is 0, and adjust torque of an engine based on current longitudinal acceleration of the vehicle

FIG. 1

A controller obtains a corrected amount of longitudinal acceleration, and performs derivation on the corrected amount of the longitudinal acceleration to obtain a derivative of the corrected amount of the longitudinal acceleration

Determine, based on a brake main cylinder pressure and a longitudinal acceleration conversion coefficient, longitudinal acceleration corresponding to a brake operation of a driver and a derivative of the longitudinal acceleration

Compare the derivative of the corrected amount of the longitudinal acceleration obtained by the controller with the derivative of the longitudinal acceleration determined based on the brake operation of the driver, to determine a deviation between the two derivatives

Determine whether the deviation meets a preset condition

No

Yes

Determine the corrected amount of the longitudinal acceleration obtained by the controller as a target corrected amount of the longitudinal acceleration

Determine a corrected amount of the longitudinal acceleration at a previous moment as a target corrected amount of the longitudinal acceleration

Adjust torque of an engine based on the target corrected amount of the longitudinal acceleration

FIG. 2

30

31                                    32

Status obtaining module ———— Torque control apparatus

FIG. 3

32

Processor

CPU 0                    41

CPU 1

42

Memory

44

Communication interface

Receiving unit          43

Sending unit

FIG. 4

Vehicle 500

**Travel system 510**

Engine 511

Energy source 512

Transmission apparatus 513

Wheels 514

**Sensor system 520**

Positioning system 521

Inertial measurement unit 522

Radar 523

Laser rangefinder 524

Camera 525

**Control system 530**

Steering system 531

Accelerator 532

Brake unit 533

Computer vision system 534

Route control system 535

Obstacle avoidance system 536

**Peripheral device 540**

Wireless communication system 541

Vehicle-mounted computer 542

Microphone 543

Speaker 544

**Computer system 560**

Processor 561

Instructions 5621

Memory 562

Power supply 550

User interface 570

FIG. 5

A vehicle control unit obtains status information of a vehicle — S601

The vehicle control unit determines a vehicle status and a required value of longitudinal acceleration based on the status information of the vehicle — S602

The vehicle control unit determines a corrected value of the longitudinal acceleration based on the status information of the vehicle, the required value of the longitudinal acceleration, and a constraint corresponding to the vehicle status — S603

The vehicle control unit controls torque of the vehicle based on the corrected value of the longitudinal acceleration — S604

FIG. 6

A vehicle control unit preprocesses status information of a vehicle to determine whether to enable a comfort torque control function — S701

No

Yes

The vehicle control unit enables the comfort torque control function, and determines a required value of longitudinal acceleration based on the status information of the vehicle — S702

The vehicle control unit does not enable the comfort torque control function, and determines that a required value of longitudinal acceleration is 0, and a corresponding corrected value of the longitudinal acceleration is also 0 — S703

FIG. 7

FIG. 8

A vehicle control unit obtains an accelerator pedal opening degree and a brake pedal opening degree — S901

The vehicle control unit compares the accelerator pedal opening degree and the brake pedal opening degree with respective corresponding status thresholds, to determine an accelerator pedal flag bit and a brake pedal flag bit — S902

FIG. 9

EP 4 707 099 A1

S1001

A vehicle
control unit determines, based on
status information, whether a vehicle
status is a driving state

No

Yes

The vehicle
control unit determines
whether the status information of a
vehicle and a required value of longitudinal
acceleration meet a first
constraint

S1002

No

Yes

S1003

The vehicle control unit determines the required value
of the longitudinal acceleration as a corrected value of
the longitudinal acceleration

S1005

The vehicle
control unit determines
whether the status information of a
vehicle and a required value of longitudinal
acceleration meet a second
constraint condition

Yes

No

S1004

The vehicle control unit determines that a corrected
value of the longitudinal acceleration is 0

S1006

The vehicle control unit determines a corrected value of
the longitudinal acceleration from a calibration map table
based on the status information of the vehicle

FIG. 10

1101

Obtaining
unit

1100

1102

Processing
unit

FIG. 11

1201

Processor

1201

Processor

1200

Interface circuit

Interface circuit

1202

1202

FIG. 12

## INTERNATIONAL SEARCH REPORT

| | International application No. |
|---|---|
| | **PCT/CN2024/079141** |

### A. CLASSIFICATION OF SUBJECT MATTER

B60W30/045(2012.01)i;  B60W40/107(2012.01)i

According to International Patent Classification (IPC) or to both national classification and IPC

### B. FIELDS SEARCHED

Minimum documentation searched (classification system followed by classification symbols)

IPC: B60W30/-, B60W40/-

Documentation searched other than minimum documentation to the extent that such documents are included in the fields searched

Electronic data base consulted during the international search (name of data base and, where practicable, search terms used)

CNTXT; CNABS; ENTXTC; VEN; CNKI: 转矩, 扭矩, 加速度, 需求值, 期望值, 目标值, 修正, 校正, 速度, 冲击度, 舒适性, torque, acceleration, demand, value, expectation, desired, target, correction, speed, impact, comfort

### C. DOCUMENTS CONSIDERED TO BE RELEVANT

| Category* | Citation of document, with indication, where appropriate, of the relevant passages | Relevant to claim No. |
|---|---|---|
| X | CN 111267853 A (GUANGZHOU AUTOMOBILE GROUP CO., LTD.) 12 June 2020 (2020-06-12) <br> description, paragraphs [0003] and [0082]-[0166], and claims 1-15 | 1-2, 6-14 |
| X | CN 116252638 A (CHINA FAW CO., LTD.) 13 June 2023 (2023-06-13) <br> description, paragraphs [0030]-[0128] | 1-2, 6-14 |
| X | CN 112622637 A (GREAT WALL MOTOR CO., LTD.) 09 April 2021 (2021-04-09) <br> description, paragraphs [0045]-[0087] | 1-2, 6-14 |
| A | CN 113335263 A (CHINA FAW CO., LTD.) 03 September 2021 (2021-09-03) <br> entire document | 1-14 |
| A | CN 111376738 A (GREAT WALL MOTOR CO., LTD.) 07 July 2020 (2020-07-07) <br> entire document | 1-14 |
| A | US 2022289186 A1 (HYUNDAI MOTOR CO., LTD. et al.) 15 September 2022 (2022-09-15) <br> entire document | 1-14 |
| A | US 2023035953 A1 (HYUNDAI MOTOR CO., LTD. et al.) 02 February 2023 (2023-02-02) <br> entire document | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 May 2024** | **07 June 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

| | | | | |
|---|---|---|---|---|
| **INTERNATIONAL SEARCH REPORT** Information on patent family members | | | International application No. **PCT/CN2024/079141** | |

| Patent document cited in search report | | | Publication date (day/month/year) | Patent family member(s) | | | Publication date (day/month/year) |
|---|---|---|---|---|---|---|---|
| CN | 111267853 | A | 12 June 2020 | WO | 2020113805 | A1 | 11 June 2020 |
| | | | | US | 2022017071 | A1 | 20 January 2022 |
| | | | | CN | 111267853 | B | 18 June 2021 |
| CN | 116252638 | A | 13 June 2023 | | None | | |
| CN | 112622637 | A | 09 April 2021 | CN | 112622637 | B | 09 August 2022 |
| CN | 113335263 | A | 03 September 2021 | CN | 113335263 | B | 12 April 2022 |
| | | | | WO | 2023001100 | A | 26 January 2023 |
| CN | 111376738 | A | 07 July 2020 | WO | 2020253676 | A1 | 24 December 2020 |
| | | | | CN | 111376738 | B | 12 July 2022 |
| US | 2022289186 | A1 | 15 September 2022 | KR | 20220127405 | A | 20 September 2022 |
| US | 2023035953 | A1 | 02 February 2023 | KR | 20230020031 | A | 10 February 2023 |

Form PCT/ISA/210 (patent family annex) (July 2022)

**EP 4 707 099 A1**

**Patent documents cited in the description**

- CN 202310711087